Europäisches Patentamt

European Patent Office

Office européen des brevets

(19)

(11) Veröffentlichungsnummer: **0 289 517**
**B1**

(12) **EUROPÄISCHE PATENTSCHRIFT**

(45) Veröffentlichungstag der Patentschrift: **01.08.90**

(51) Int. Cl.5: **A 01 B 11/00**, A 01 B 49/06

(21) Anmeldenummer: **87901267.2**

(22) Anmeldetag: **19.12.86**

(86) Internationale Anmeldenummer:
**PCT/EP86/00764**

(87) Internationale Veröffentlichungsnummer:
**WO 87/03774 02.07.87 Gazette 87/14**

(54) **VERFAHREN UND VORRICHTUNG ZUR AUFLOCKERUNG VON BÖDEN.**

(30) Priorität: **23.12.85 DE 3545970**

(73) Patentinhaber: **ODENWALD WERKE
RITTERSBACH GMBH**
-
**D-6957 Elztal-Rittersbach (DE)**

(43) Veröffentlichungstag der Anmeldung:
**09.11.88 Patentblatt 88/45**

(72) Erfinder: **STRAUS, Reinhold
Pappelweg 5
D-6950 Mosbach/Bd. (DE)**

(45) Bekanntmachung des Hinweises auf die
Patenterteilung:
**01.08.90 Patentblatt 90/31**

(74) Vertreter: **Fischer, Adolf H.
Kurfürstenstrasse 32
D-6700 Ludwigshafen/Rhein (DE)**

(84) Benannte Vertragsstaaten:
**AT BE CH DE FR GB IT LI LU NL SE**

(56) Entgegenhaltungen:
EP-A-0 025 568      FR-A-1 213 799
AT-A- 366 534       FR-A-2 059 807
CH-A- 220 678       FR-A-2 076 553
DE-A-3 416 307      FR-A-2 364 602
DE-C- 340 331       FR-A-2 534 770
DE-C- 390 209       FR-A-2 535 150
FR-A- 515 233       US-A-2 161 428
FR-A- 672 016       US-A-3 117 697
FR-A-1 205 861

Courier Press, Leamington Spa, England.

**Beschreibung**

Die Erfindung betrifft ein Verfahren zur Auflokkerung von Böden im Unter- und Oberbodenbereich unter Verwendung von Grabwerkzeugen, mit denen der Boden aufgebrochen wird, wobei die Grabkante des Grabwerkzeuges in einer ellipsenförmigen Bewegung geführt wird und dieser Bewegung als Fahrbewegung eine geradlinige Bewegung überlagert wird, und daß die längere Achse der Ellipse von der Bodenoberfläche in den Boden gerichtet ist und eine Neigung zur Fahrtrichtung aufweist.

In der Landwirtschaft ist es notwendig, strukturkranke Böden zu bearbeiten. Viele Boden weisen aufgrund der modernen Bewirtschaftsmethoden und der immer schwerer werdenden Agrarmaschinen im Oberflächen- und Pflugsohlenbereich starke Verdichtungen auf. Staunässe und Trokkenschäden sind die Folge. Die empfindlichen Pflanzenwurzeln sind nicht in der Lage, den Widerstand zur Tiefe hin zu überwinden. Dadurch steht ihnen nur ein begrenzter Lebensraum zur Verfügung und der am Wachstum beteiligte Boden besitzt nur eine begrenzte Wasser-Speicherkapazität.

Mit Hilfe von Tieflockerungsgeräten können solche Strukturschäden beseitigt werden. Über eine gleichzeitige Tiefdüngung mit Hilfe eines Zusatzgerätes ist eine Stabilisierung der neugeschaffenen Bodenstruktur möglich. Ein Verfahren der eingangs genannten Art ist bekannt (DE—C—340 331), bei dem die Charakteristik der Ellipsen konstant bleibt und zum Vornehmen von Veränderungen wird die Kinematik gekippt. Dies bedeutet einen großen Aufwand und Baugröße und nicht die Möglichkeit, die Ellipse den jeweiligen Verhältnissen anzupassen. Hierbei ist die Charakteristik so ausgelegt, daß es nur zu einem Einstechen und Losbrechen kommt und weiterhin nur ein Ausjäten möglich ist. Auf die Verhaltnisse der Tieflockerung übertragen ergibt diese Lösung nicht vertretbare Baugrößen und Gewichte. Weiterhin ergibt sich an der Kurbelwelle ein Drehmomentenverlauf, der nicht vertretbare Größenordnungen erreicht. Die bekannte beschriebene Bodenbearbeitungsmaschine weist einen waagerecht angeordneren Balken auf, wobei als Grabwerkzeug einzelne Finger vorgesehen sind. Zum Erzeugen der elliptischen Bewegung dient ein Kurbeltrieb, wobei der Balken andererseits an einem Gelank gehaltert ist. Diese Maschine ist daher nur für eine reine Oberbodenbearbeitung mit einer Bearbeitungstiefe von etwa 20—25 cm geeignet.

Bei der Bearbeitung von Böden ist der Wald und der Kampf gegen das Waldsterben ein weiteres Anwendungsgebiet. Die Ursachen für das Waldsterben sind auf die Einflüse von saurem Regen, saurem Boden, Nährstoffmengel, Trokkenheit sowie einer Reihe von anderen Faktoren zurückzuführen. Da diese Einflüsse vorhanden sind und auch in weiter Zukunft noch extremer vorhanden sein werden, müssen Mittel und Wege gefunden werden, deren Wirkung zu eliminieren.

Die sinnvollste und wahrscheinlich auch wirkungsvollste Lösung wäre wohl, die Widerstandskraft der Bäume zu steigern. Das heißt, daß bei absolutem Mangel Nährstoffe ergänzt (Oberflächen- und Tiefdüngung), daß aber auch andererseits auf im Boden festliegende Nährstoffe durch Beeinflussung der Bodendynamik (indirekte Düngung) mobilisiert werden können, wobei die Belüftung, der Wasserhaushalt (z.B. Speicherfähigkeit bei lokkerem Boden), die Temperatur und die Bodenreaktion eine entscheidende Rolle spielen.

Meliorative Maßnahmen können im Wald nur alle ca. 50 Jahre durchgeführt werden, nämlich dann, wenn gelichtet wurde und eine natürliche Verjüngung noch nicht stattgefunden hat. Eine weitere Möglichkeit zur Melioration besteht unmittelbar vor einer künstlichen Bepflanzung. Unter diesen Voraussetzungen treffen die jungen Pflanzen vorzügliche Verhältnisse für eine intensive Durchwurzelung, sprich großen Lebensraum an, was ihnen ein schnelles Wachstum und große Widerstandskraft ermöglicht.

Systeme, die auf eine reine Oberflächendüngung hinauslaufen haben den Nachteil, daß sie stark zeitverzögert und abgeschwächt wirken, de der Boden nicht durch mechanische Einflüsse verändert wurde. Aufgrund der heftigen Diskussion über das Waldsterben ist der gegenwärtige Zeitpunkt für die Durchsetzung meliorativer Maßnahmen im Wald sehr günstig.

Im Obst-, Garten- und Weinbau sind derartige meliorative Maßnahmen ebenfalls von großer Bedeutung. Es treffen auch hier im wesentlichen die vorher genannten Argumente zum größten Teil zu. Bei diesen Kulturen geht man jedoch von Standzeiten von ca. 20 Jahren aus. Ein weiterer Unterschied liegt auch noch darin begründet, daß hier das Befahren und Bearbeiten zwischen den Zeilen zu jeder Zeit möglich ist und dadurch in den Fahrspuren starke Verdichtungen verursacht werden. Beim Arbeiten zwischen den Zeilen haben tieflockernde Geräte, die wenig wurzelzerstörend und zugkraftgünstig arbeiten, bei gleichzeitiger Tiefendüngung große Vorteile. Es ist bekannt, daß im Monokulturenobstbau unterirdisch abgekapselte Wurzeln, verursacht durch Verdichtung ihre Nährstoffe nicht freisetzen und zudem noch toxische Reaktionen auslösen. Der dadurch entstehende Negativeinfluß ist erheblich.

Als weiteres Anwendungsgebiet kommt die Bodenstabilisierung im Straßenbau infrage. Die Bodenstabilisierung bereitet im Straßenbau oft große Schwierigkeiten. Derunter versteht man das ca. 50 cm dicke schichtweise Auftragen des Straßenunterbaues mit Abraum unter Beimischung von Kalk und anschließender Verdichtung mit Rüttelwalzen oder anderen Verdichtern. Die behördlichen Auflagen in Bezug auf das exakte, gleichmäßige Beimischen des Kalkes werden sehr streng gehandhabt. Besonders bei mit Steinen durchsetztem Boden bereitet die Beimischung große Probleme. Fräsen reagieren, z.B. auf Steine, sehr empfindlich. Ein weiterer unangenehmer Aspekt ist die Einwirkung des Kalkstaubes auf die Bedienungspersonen der Aus- und Einbringgeräte.

Bei der Tieflockerung ist es wichtig, daß der verdichtete Boden in möglichst kleine Aggregate zertrümmert und der fruchtbare Überboden nicht wie beim Pflügen nach unten verlagert wird, sondern die Bodenschichtung zumindest grob erhalten bleibt. Nur in Ausnahmefällen ist eine meist nur geringfügige Durchmischung von Unter- und Überboden erwünscht.

Das Prinzip der bisher üblichen Aufbruchlockerung erfüllt dies, soweit es sich um bewegliche Geräte (bewegte Schare) handelt, in vielen Fällen. Da jedoch die Lockerungsintensität im Scharbereich am größten ist, werden bei bestimmten Bodenstrukturen die darüberliegenden Bodenschichten wie z.B. der Pflugsohlenbereich nicht intensiv genug erfaßt. Starre Geräte erfüllen in der Regel die gestellten Forderungen nicht. Bei den starren Aufbruchlockerungssystem muß die gesamte, bei beweglichen Systemen ca. 60—80% der Lockerleistung über die Fahrantriebe erfolgen, was in beiden Fällen einen sehr zugkraftintensiven Einsatz bedeutet.

Es ist bekannt, daß bei den erwähnten Systemen nur unter sehr günstigen Wetterbedingungen und dazu noch jahreszeitlich beschränkt Meliorationsarbeiten durchgeführt werden können. So ist z.B. bei feuchten Böden nach der derzeit geltenden Regel unterhalb der Ausrollgrenze des Bodens eine qualitative Tieflockerung des Bodens bei den meisten Bodenarten nicht mehr möglich. Speziell bei oberflächlich vernäßten, im Untergrund jedoch trockenen (lockerungswürdigen) Böden ist meist wegen Mangel an Zugkraft ein Meliorationsbetrieb nach dem Aufbruchsystem oft sogar mit Raupen als Zugmittel nicht mehr durchführbar. Ferner tragen die zwangsläufig hohen Schlupfanteile zu einem schlechten Wirkungsgrad, hohen Verschleiß und somit zur Unwirtschaftlichkeit bei. Für die gleichzeitige Tiefdüngung sind derartige Systeme deshalb problematisch, weil die Einbringmechanismen ständigverstopfen und eine Einbringung nur bandartig (schichtweise) hinter dem Schar möglich ist. Der sich oft über die Lockerungssohle konzentriert verlagernde Dünger hat häufig Grundwasserkontaminationen zur Folge.

Eine qualitative Tiefdüngung (Meliorationsdüngung) degegen ist dann vorhanden, wenn der Meliorationsdünger bis zur vollen Lockerungstiefe gleichmäßig verteilt eingebracht wird. Durch die daraufhin entstehenden starken Wurzelaktivitäten im Unterboden wird Wurzelhumus erzeugt und die Bodenstruktur stabilisiert. Unter diesen Voraussetzungen wird der Dünger gebunden und kannsich nicht zum Grundwasser hin verlagern.

Der Erfindung liegt die Aufgabe zugrunde, ein Verfahren und eine Vorrichtung vorzuschlagen, mit dem bzw. mit der es möglich ist, den verdichteten Boden bis zu einer Tiefe von etwa 60—80 cm unter extrem niedriger Zugleistung bzw. extrem niedrigen Schlupf bei Erhaltung der Bodenschichtung aufzulockern und bei Bedarf gleichzeitig eine Oberbodenbearbeitung sowie eine qualtitative Tiefendüngung durchzuführen, ohne Düngereinbringwerkzeuge im Bdoen mitführen zu müssen.

Diese Aufgabe wird nach dem erfindungsgemäßen Verfahren dadurch gelöst, daß das Werkzeug beim Eindringen in den Boden im Oberbodenbereich entgegen der Fahrtrichtung einen stärkeren Kippweg erfährt als an der Schneide und daß beim Ausheben des Werkzeuges der Boden im Oberbodenbereich entgegen der Fahrtrichtung stärker verdrängt wird als unten.

Ein vorteilhafter Verfahrensschritt besteht darin, daß bei jedem Einstich des Werkzeuges Zusatzmittel wie Düngemittel in den entstehenden Erdspalt eingeblasen oder eingeworfen werden.

Ein weiterer vorteilhafter Verfahrensschritt besteht darin, daß beim Einstechen des Werkzeuges eine Vorlockerung mit der Scharoberseite und beim Ausheben des Werkzeuges mit der Scharunterseite eine Feinlockerung durchgeführt wird.

Eine vorteilhafte Vorrichtung zum Durchführen des Verfahrens, bei dem ein sich in Fahrtrichtung erstreckender, als Träger für Grabwerkzeuge dienender Balken über eie erstes quer zur Fahrtrichtung ausgerichtetes Gelenk an einem mit einem Zugfahrzeug fest verbundenen Gestell angelenkt und in einer sich in Fahrtrichtung erstreckenden senkrechten Ebene mit Hilfe eines über ein zweites Gelenk am Balken angreifenden Kurbel- oder Exzenterantriebes um das erste Gelenk verschwenkbar antreibbar ist, besteht darin, daß das erste Gelenk am unteren Ende eines Hebels mit vorwählbarer Hebellänge angeordnet ist, dessen oberes Ende über ein drittes quer zur Fahrtrichtung ausgerichtetes Gelenk, an dem mit dem Zugfahrzeug fest verbundenen Gestell in einer vorwählbaren Position angelenkt ist, daß der Abstand des dritten Gelenks von dem zweiten Gelenk kleiner ist als die Summe der Länge des Hebels und des Abstands des ersten Gelenks von dem zweiten Gelenk, daß sich der Durchmesser des von den Kurbelantrieb beschriebenen Kreises nicht mit der Verbindungslinie zwischen dem ersten Gelenk und dem dritten Gelenk überschneidet und daß die Länge des Hebels größer ist als der Radius des von dem Kurbelantrieb beschriebenen Kreises.

Eine vorteilhafte Ausführungsform der Vorrichtung besteht darin, daß mehrere Grabwerkzeuge an dem Balken vor und/oder nach dem Kurbel- oder Exzenterantrieb angeordnet sind.

Es ist weiterhin vorteilhaft, daß der Antrieb hydrostatisch oder über eine Zapfwelle des Zugfahrzeuges erfolgt.

Es wird weiterhin vorgeschlagen, daß mehrere Balken mit Werkzeugen nebeneinander über die Fahrbreite verteilt an einem Rahmen gehalter sind, der am Zugfahrzeug anbringbar ist.

Es ist weiterhin vorteilhaft, daß der Rahmen an einer Frontplatte befestigte Seitenwangen aufweist, die an einem den Antrieb und den Balken halternden Querträger angebracht sind und daß an dem Querträger weitere Wangen angeordnet sind, an denen der Balken über Laschen gelenkig aufgehängt ist.

Es ist vorteilhaft, daß an den Wangen im Abstand und in Höhe zum Querträger verschiedene Bohrungen für das Anbringen der Lasche vorgesehen sind.

Es ist weiterhin vorteilhaft, daß die Befestigungsposition der Lasche an den Wangen stufenlos verstellbar ist.

Es wird vorgeschlagen, daß die Wangen zwischen Frontplatte und Querträger quer zur Fahrtrichtung federn und in vertikaler Richtung stabil ausgebildet sind.

Nach der Erfindung wird weiterhin vorgeschlagen, daß der Balken in etwa mittig ein Lager für den Antrieb aufweist, an dem beidseitig Wangen angeordnet sind, die zum Anbringen der Werkzeuge mit einem Bohrbild versehen sind.

Nach einem weiteren Vorschlag geht man so vor, daß ein Grabwerkzeug mit einem Holm und kurzem Schar nach dem Antrieb angeordnet ist.

Es ist vorteilhaft, daß die Wangen um etwa 180° verschwenkt in Fahrtrichtung (a) weisend an dem Querträger befestigt sind.

Es wird weiterhin vorgeschlagen, daß das Grabwerkzeug als Quersicherung pendelnd am Balken aufgehängt ist.

Vorteilhaft sind die Laschen an den weiteren Wangen des Rahmens federnd abgestützt.

Es wird weiterhin vorgeschlagen, daß das Werkzeug einseitig am Balken befestigt ist und an einem zweiten Punkt an einem Federglied abgestützt ist.

Vorteilhaft ist, daß am Balken ein federndes Werkzeug befestigt ist.

Eine weitere vorteilhafte Ausführungsform sieht vor, daß am Rahmen eine Einrichtung zum Zuführen von Zusatzmitteln wie Düngemitteln vorgesehen ist.

Es wird weiterhin vorgeschlagen, daß die Einrichtung ein an einer Dosiereinrichtung angeordnetes Zuführrohr aufweist.

Eine weitere vorteilhafte Ausführungsform sieht vor, daß die Dosiereinrichtung als Zellradschleuse ausgebildet ist und mit der Dosiereinrichtung eine an ein Gebläse angeschlossene Luftzuführung verbunden ist.

Es ist vorteilhaft, daß oberhalb der Dosiereinrichtung ein Behälter mit einem Rührwerk angeordnet ist.

Weiterhin ist es vorteilhaft, daß im Boden des Behälters vor der Dosiereinrichtung ein Dosierschieber angeordnet ist.

Nach einem weiteren Vorschlag geht man so vor, daß im Behälterboden eine fahrgeschwindigkeitsabhängig angetriebene Zellradschleuse angeordnet ist und unterhalb der Schleuse ein stufenlos verstellbares Prallblech vorgesehen ist.

Es ist vorteilhaft, daß mit dem Schleusenrad ein weiteres Zellrad im Eingriff ist.

Nach einem anderen Vorschlag der Erfindung geht man so vor, daß im Behälter eine auf Blattfederbasis beruhende Rüttel vorrichtung mit seitlichen Rüttelzinken vorgesehen ist, die von den Stegen der Zellradschleuse angetrieben ist.

Vorteilhaft ist am Boden des Behälters ein fahrgeschwindigkeitsabhängig angetriebenes Förderband vorgesehen.

Eine vorteilhafte weitere Ausführungsform sieht vor, daß der Rahmen mit dem Balken und der Dosiereinrichtung an einem Nachlauffahrzeug angeordnet sind.

Es ist weiterhin vorteilhaft, daß das Werkzeug sichelförmig ausgebildet ist und beim Einstechen ein Freiwinkel an der Schneide vorhanden ist.

Vorteilhaft ist, daß das Werkzeug einen kurzen Schar mit unterseitiger und oberseitiger Schneide aufweist, der an einem Holm befestigt ist.

Es ist weiterhin vorteilhaft, daß am Balken nach dem Lockerungswerkzeug ein Spatenwerkzeug angeordnet ist.

Gemäß einem weiteren Vorschlag geht man so vor, daß an dem Lockerungswerkzeug im oberen Bereich ein zusätzliches Seitenschar angebracht ist.

Gemäß einer weiteren Ausführungsform ist es vorteilhaft, daß das Lockerungswerkzeug seitlich abgekantet ist und daß nach diesem Werkzeug an Federsicherungen angeordnete Zusatzwerkzeuge vorgesehen sind.

Vorteilhaft ist, daß als Lockerungswerkzeug ein Tiefenzinken vorgesehen ist.

Weiterhin sind am Balken mehrere Zinken angeordnet.

Vorteilhaft sind im Aufbruchbereich des Balkens zwei versetzt angeordnete Schare vorgesehen.

Gemäß einer weiteren Ausführungsform wird vorgeschlagen, daß am Balken für die Tiefen- und Oberbodenbearbeitung Gänsefußschare angebracht sind.

Schließlich ergibt eine weitere Ausführungsform, daß der Balken an einem Parallelogrammhebelsystem angeordnet ist.

Das erfindungsgemäße Verfahren und auch die Vorrichtung bringt den Vorteil, daß nach dem Abbruchsystem gearbeitet wird und daß es je nach Einsatz keine oder nur eine geringe Zugleistung erfordert. Durch die erfindungsgemäßen Maßnahmen sind Ellipsen bzw. Zykloiden möglich, die sowohl den Erfordernissen tiefenorientierter Werkzeuge (Tieflockerung) als auch den Erfordernissen der Oberbodenbearbeitungswerkzeuge gerecht werden. Der dominierende Leistungsanteil fließt zwangsläufig über die Zapfwelle. Die ebenfalls unter Abbruchsysteme einzureihenden Geräte wie Fräsen. Spatmaschinen u.dgl. werden bisher für die Oberbodenbearbeitung eingesetzt. Tieffräsen werden vereinzelt auch für die Unterbodenmelioration verwendet, erweisen sich jedoch wegen ihrer extrem niedrigen Flächenleistung und dem extrem hohen Leistungsbedarf sowie ihrer zu intensiven Durchmischung des Unter- und Oberbodens als nachteilig.

Durch das immer neue Einstechen in den Boden werden an der Oberfläche befindliche Ernterückstände nicht wie bei anderen Systemen rechenartig von den einzelnen Zähnen erfaßt, sondern bei jedem Einstich zerschnitten und beim Ausfahren liegeangelassen. Sehr vorteilhaft wirkt sich ein solches System bei der Bearbeitung oberflächlich vernäßter und bereits bearbeiteter, z.B. gepflügter Böden aus, de trotz der schlechten Traktion des Oberbodens eine qualitative Tiefenlockerung möglich ist.

Da keine bzw. nur wenig Zugleistung erforderlich ist, ist das Gerät weitgehend von Steigungen unabhängig und auch bei eingenäßten Oberböden einsetzbar. Ferner sind Sicherheitseinrichtungen vorgesehen, die einen Einsatz beim Auftreten von Hindernissen wie Steinen, Stümpfen, Ästen usw. möglich machen.

Durch entsprechende Werkzeugkombinationen ist es möglich, ein solches Gerät für die Tieflockerung, Tiefdüngung und Oberbodenbearbeitung zugleich sowie nur für die Oberbodenbearbeitung einzusetzen. Solche Werkzeugkombinationen sind einfach möglich, da die Vorrichtung nach dem Baukastenprinzip aufgebaut ist.

Die Anwendungsgebiete des erfindungsgemäßen Verfahrens und der Vorrichtung sind somit vielseitig. In der Landwirtschaft ist die Anwendung zur Bearbeitung strukturkranker Böden im Unter- und Oberbodenbereich möglich. Im Wald beim Kampf um das Waldsterben ist ein Einsatz vorteilhaft, weil in den Waldboden Dünger unterschiedlichster Konsistenz und Zusammensetzung bis in Tiefen von etwa 50 cm eingeimpft werden kann. Das weitere Anwendungsgebiet im Obst-, Garten- und Weinbau bedingt das Bepflanzen unter stark vereinfachten Voraussetzungen und somit kostengünstig. Im Streßenbau läßt sich das Verfahren und die Vorrichtung zur Bodenstabilisierung vorteilhaft einsetzen. Es kann hierbei der Stabilisierungskalk ausgebracht und gleichzeitig eingearbeitet werden, was gegenüber bisherigen Praktiken eine starke Staubreduzierung und Leistungssteigerung bedeutet.

Die Erfindung wird in der nachfolgenden Beschreibung anhand von in den Zeichnungen dargestellten Ausführungsbeispielen näher erläutert.

Es zeigen,

Fig. 1 eine schematische Darstellung der erfindungsgemäßen Vorrichtung,

Fig. 2 eine Abwandlung der in Fig. 1 dargestellten Ausführungsform der Vorrichtung,

Fig. 3 den Verfahrensablauf beim Auflockern des Bodens durch das Grabwerkzeug in sechs Schritten,

Fig. 4 den Verfahrensablauf entsprechend Fig. 3, jedoch bei Verwendung eines anderen Grabwerkzeuges,

Fig. 5 Arbeitsfolge in Draufsicht der Vorrichtung bei einer Ausbildung als Vier-Balkengerät,

Fig. 6 eine schaubildliche Ansicht des beweglichen Balkens zum Anbringen der Werkzeuge,

Fig. 7 eine Ansicht der gesamten Vorrichtung im Aufriß,

Fig. 8 eine weitere Ausführungsform der in Fig. 7 dargestellten Vorrichtung in Verbindung mit einer Sicherheitseinrichtung beim Auftreffen auf ein Hindernis,

Fig. 9 eine weitere Ausführungsform dieser Vorrichtung gemäß Fig. 8,

Fig. 10 eine Ausführungsform dieser Vorrichtung mit einer Federschar als Werkzeug,

Fig. 11 eine weitere Ausführungsform der Vorrichtung gemäß dem System der Aufbruchlockerung im Aufriß,

Fig. 12 eine Abwandlung dieser Ausführungsform,

Fig. 13 die in Fig. 12 dargestellte Vorrichtung mit einer Steinsicherungseinrichtung,

Fig. 14 die in Fig. 8 dargestellte Vorrichtung in Stellung $P_2$ mit angedeuteter Meliorationsdüngeeinrichtung,

Fig. 15 eine Ausführungsform der Vorrichtung im Aufriß mit einer Düngemitteleinrichtung,

Fig. 16 eine vergrößerte Ansicht der für die Düngemitteldosierung verwendeten Zellradschleuse,

Fig. 17 einen Längsschnitt durch diese Einrichtung,

Fig. 18 eine weitere Ausführungsform einer Düngemitteleinrichtung,

Fig. 19 eine Abwandlung dieser Ausführungsform,

Fig. 20 ein weiteres Ausführungsbeispiel einer derartigen Düngemitteleinrichtung,

Fig. 21 eine derartige Vorrichtung als Nachlaufgerät im Aufriß,

Fig. 22 bis 28 den Balken mit verschiedenen Werkzeugkombinationen,

Fig. 29 eine Abwandlung des in Fig. 1 dargestellten Hebelsystems unter Verwendung von sieben Gelenken je Werkzeugeinheit und

Fig. 30 eine Abwandlung der in Fig. 29 gezeigten Ausführungsform.

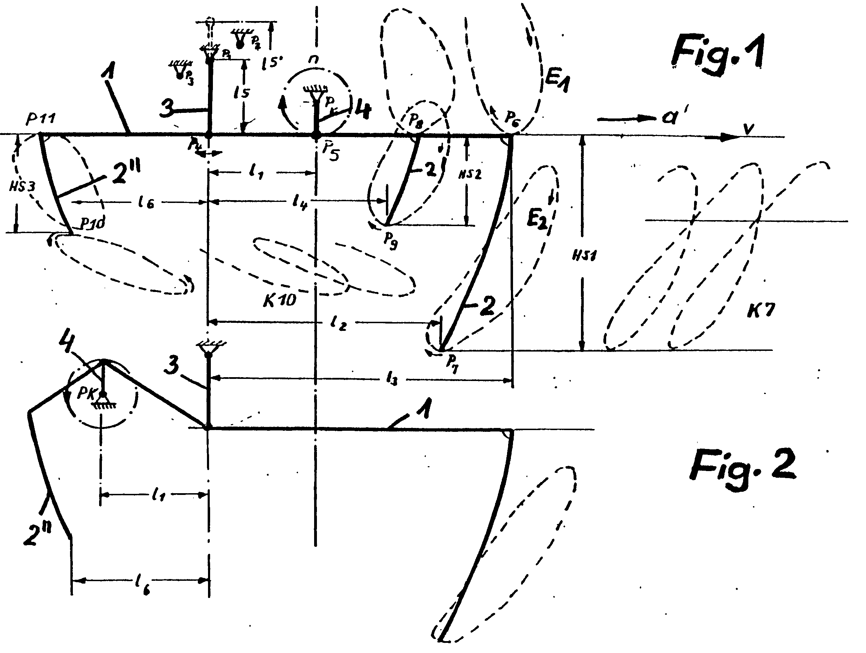

In den Figuren 1 und 2 ist das der Erfindung zugrundeliegende System schematisch dargestellt. Ein Rotationsbalken 1 wird nach den Darstellungen in Fig. 1 oder 2 angetrieben.

Da sich das Prinzip gemäß Fig. 1 und 2 abgesehen vom Drehsinn der Kurbel in Bezug auf die Werkzeugkinematik ähnlich verhalten, die Fig. 1 jedoch eine kompaktere Bauweise gestattet, wird bei der Beschreibung nur auf Fig. 1 eingegangen.

Durch die Moglichkeit, an den verschiedensten Stellen Werkzeuge mit den unterschiedlichsten Formgebungen anbringen zu können, z.B. 2, 2' bzw. 2'', ist es möglich, die unterschiedlichsten Bodenbearbeitungseffekte zu erzielen.

Eine Kurbel mit dem Radius r dreht sich um den Punkt PK und treibt den Rotationsbalken 1, der an einem Hebel 3 über die Gelenkpunkte $P_1 - P_4$ (oder $P_2 - P_4, P_3 - P_4, ... P_x - P_4$) aufgehängt ist.

Bedingt durch das Zusammenspiel zwischen dem Hebel 3 und dem Kurbeltrieb 4 um PK und dem Übersetzungsverhältnis $l_1/l_2$ beschreibt der Punkt 6 die Ellipse $E_1$.

Je nach Größe $l_2$ und HS1 beschreibt P7 die Ellipse E2. Wird der komplette Antrieb mit einer Geschwindigkeit V in Pfeilrichtung bewegt, der Kurbeltrieb 4 mit einer bestimmten Drehzahl in Pfeilrichtung angetrieben und der Hebel 3 in $P_1$ eingehängt, dann beschreibt P7 eine Kurve K7 (Zykloide).

In ähnlicher Weise, jedoch den entsprechenden Proportionen gemäß, verhalten sich P6, P8, P9 sowie P10 und P11.

Während bei Kurve K7 die Geschwindigkeit V in Bezug auf P7 eine subtrahierende Veränderung herbeiführt, verhält sich die Fahrgeschwindigkeit bei der Kurve K10 in Bezug auf P10 addierend.

Grob gesagt arbeiten Werkzeuge vor dem Hebel 3 wie z.B. 2 und 2' nach dem für diesen Gerätetyp dominierenden Abbruchsystem und nur für die Oberbodenbearbeitung gedachte hinter dem Hebel 3 angeordnete Werkzeuge wie z.B. 2'' nach dem Aufbruchsystem.

Durch unterschiedliche Längen ($l_5$, $l_5'$) und Aufhängungen an den Punkten $P_1$, $P_2$, $P_3$ oder $P_x$, sowie unterschiedlichen Werkzeugformen 2, 2', 2'' usw., Höhen HS1, HS2, HS3, HSX und Längen $l_2$ und $l_3$ usw. ergeben sich für das Rotationsbalkensystem die verschiedenartigsten Bewegungscharakteristiken, die bei den vielseitigen Einsätzen eine wichtige Rolle spielen.

Aus den geometrischen Darstellungen des Hebelsystems ergibt sich unmittelbar, daß bestimmte Hebellängen und Abstände eingehalten werden müssen, damit das System funktionsfähig ist. Eine erste Bedingung sieht vor, daß die Streckte vom dritten Gelenk $P_x$ zu dem zweiten Gelenk P5 in jeder Kurbelstellung kleiner sein muß als die Summe der Hebellängen $l_5$ und $l_1$, da ansonsten der Antrieb blockiert. Eine weitere Bedingung sieht vor, daß der Kurbelkreis und die Verbindungslinie zwischen dem dritten Gelenk $P_x$ und dem ersten Gelenk P4 sich nicht überschneiden, was ebenfalls an einem Blockieren des Antriebs führt. Aus diesen beiden Bedingungen folgen die nachstehenden Aussagen:

$$l_5 \geqq 1,5\ r$$

$$l_1 \geqq 3 \times r$$

Es erweist sich ferner als sinnvoll, daß der Balken 1 in der Grundstellung (Hebel 3 und Kurbel 4 parallel nach unten gerichtet, Fig. 1) eine Neigung von 15—20° in Fahrtrichtung und beim oberen Totpunkt ungefähr den gleichen Betrag nach oben gegen die Fahrtrichtung aufweist.

Für die praktische Handhabung gilt im Rahmen der aufgezeigten Grenzen: Je weiter die Aufhängung in Richtung $P_2$ geht, desto flacher wird die Ellipse $E_2$ bzw. $E_2'$, und je weiter die Aufhängung in Richtung P3 geht, desto steiler wird $E_2$ bzw. $E_2'$. $E_2''$ verhält sich umgekehrt proportional.

Schließlich ergibt sich noch als dritte Bedingung, daß die Länge des Hebels 3 größer sein muß als der Radius des von dem Kurbelantrieb beschriebenen Kreises.

Den einzelnen Anwendungsbeispielen kann entnommen werden, wie diese einführenden Theorien geräteseitig zur Anwendung gebracht werden können.

Das vom Rotationsbalken im Abbruchbereich aufgenommene Werkzeug 2 ist in Bezug auf $l_1$ und $l_2$ und HS1 so ausgelegt, daß sich bei Überlagerung von Rotations- und Fahrbewegung bei P7 eine Kurve K7 ergibt. Ähnliches, jedoch entsprechend richtungsverschoben, geschieht bei P6 aus dem Verhältnis $l_1/l_3$.

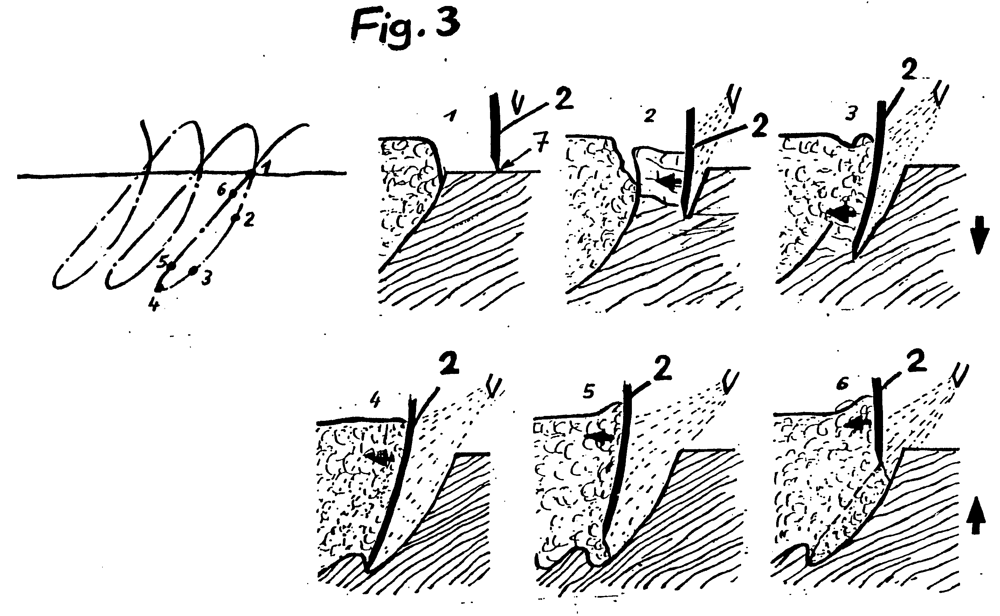

Stellt man sich zwischen P7 und P6 ein gekrümmtes Schar vor und sticht dieses in ständiger Widerholung wie beschrieben in den Boden ein, dann ergibt sich folgender für eine Abbruchlockerung, gegebenenfalls mit Tiefdüngung wichtiger Effekt (Fig. 3).

Während das Werkzeug 2 unter sehr günstigem Schnittwinkel einsticht, so daß ein Freiwinkel an der Schneide 7 vorhanden ist, erfolgt gleichzeitig eine Bodenverdrängung, und zwar bedingt durch das Kippen im Oberbodenbereich stärker als unten gegen die Fahrtrichtung, was gleichzeitig einen Lockerungseffekt des abgebrochenen Materials zur Folge hat (siehe Bildfolge 1—3). Die Bildfolge läßt weiter erkennen, daß auch beim Ausheben des Werkzeuges 2, bedingt durch die kinematischen Verhältnisse, eine Verdrängung gegen die Fahrtrichtung und somit ein weiterer Lockerungseffekt entsteht. Wichtig dabei ist, daß nicht wie bei anderen Meliorationsverfahren der Boden gemischt oder gewendet wird (guter Boden nach unten), sondern in seiner Schichtung weitgehendst erhalten bleibt. Der bei einem solchen Vorgang sich ergebende Spalt ist dazu geeignet. Dünger in Staub- und Granulatform einzublasen oder einfallen zu lassen, ohne daß Einbringwerkzeuge den Boden berühren und verstopfen.

Durch diese Werkzeugbewegung (Bilder 2 bis 6 in Fig. 3) wird eine Schubwirkung auf das Trägerfahrzeug ausgeübt, was den Einsatz solcher Meliorationsgeräte auch unter schlechten Traktionsverhältnissen und Steigungen ermöglicht.

Da am Rotationsbalkensystem lediglich der Kurbelradius des Kurbeltriebes 4 und P5 sinnvollerweise auch P4, als konstant, alle anderen Größen durch Umsteckverfahren oder Werkzeuggestaltung veränderlich sind, ist die Kurve K7 und sinngemäß auch K9 und K10 sowie der Freiwinkel beim Einstechen und die Verdrängungscharakteristik beliebig beeinflussbar.

So ergeben sich z.B. beim Einsatz im Wald bei der Einbringung von Meliorationsdünger andere Verhältnisse als im Ackerboden usw.

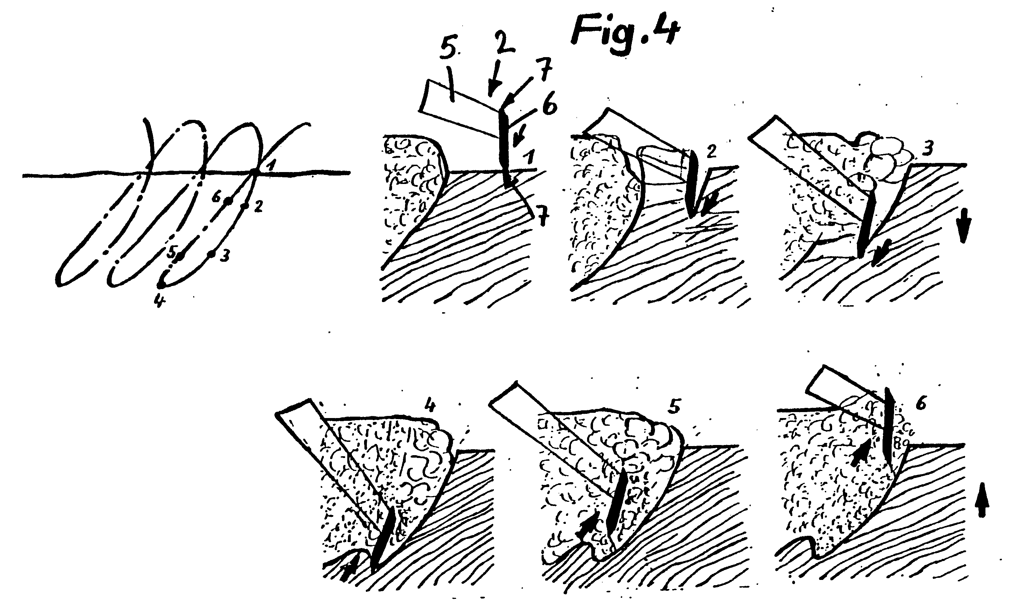

Bei der Verwendung eines Werkzeuges 2 gemäß Fig. 4, bei dem an einem Holm 5 ein kurzes Schar 6 mit oben und unten befindlicher Schneide 7 angeordnet ist, ist es möglich, den Eindringwiderstand beim Einstechen bzw. Vorlockern zu minimieren (Bilddarstellungen 1 bis 3) und beim Ausheben mit der Scharunterseite eine Feinlockerung durchzuführen (Bilddarstellungen 4 bis 6). Bei einer solchen Anordnung wird beim Einstechen eine Schub- und Hubkraft und beim Ausheben eine Einzugs- und Zugkraft auf das Trägerfahrzeug ausgelöst. Das Schar 6 kann je nach Bedarf in den unterschiedlichsten dem jeweiligen Einsatz entsprechenden Abmessungen angeordnet sein. Der Anstellwinkel und die sich ergebende Kurvenform K7 sollten jedoch so gewählt werden, daß beim Einstechen ein Freiwinkel vorhanden ist.

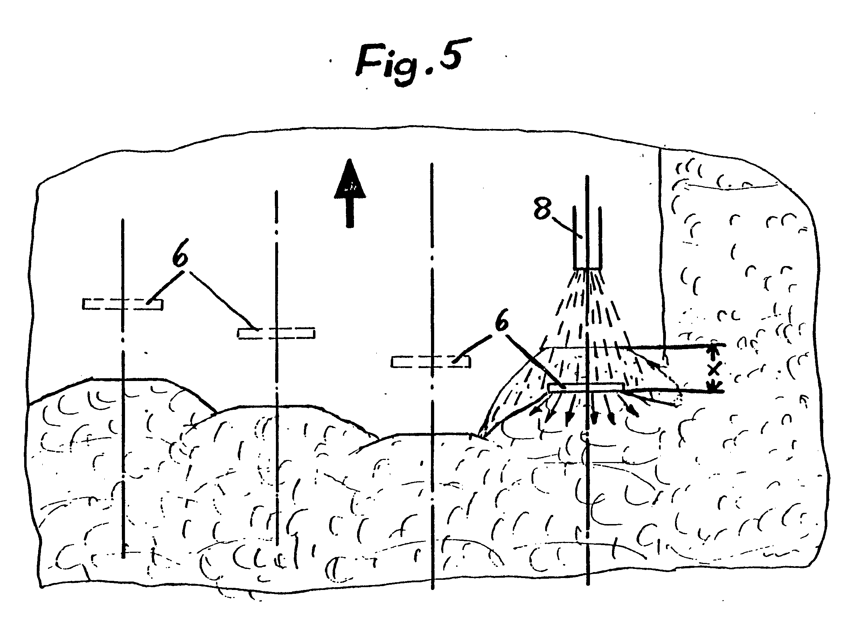

Eine derartige schematisch in Fig. 1 dargestellte Vorrichtung besteht in der Regel aus mindestens zwei Rotationssystemen, wobei die gängigste Ausführung aus vier solcher Systeme besteht. Die Systeme arbeiten bei der Zweierkombination 180° versetzt und bei der Viererkombination um jeweils 90° zueinander versetzt. In Fig. 5 ist schematisch eine solche Vorrichtung in einer Draufsicht dargestellt und es sind die einzelnen Schare 6 erkennbar. Der in Fig. 5 dargestellte Pfeil gibt die Fahrtrichtung en. Über ein Rohr 8 wird beispielsweise Düngemittel zugeführt. Bei dem ersten rechten Schar 6 ist mit dem Buchstaben X der Verdrängerweg dargestellt und das Schar beim Einstechen und Verdrängen gezeigt. Hinter dem Schar 6, dargestellt durch den Abstand X ergibt sich der Spalt während des Einstech- und Verdrängungsvorganges.

Der Seitenabstand dieser Schar 6 liegt zwischen 50 und 80 cm, wobei die Exzenterreihenfolge in der Regel beim Vier-fachgerät von rechts nach links erfolgt. Je nach Einsatz und Werkzeug können jedoch auch andere Reihenfolgen erforderlich sein.

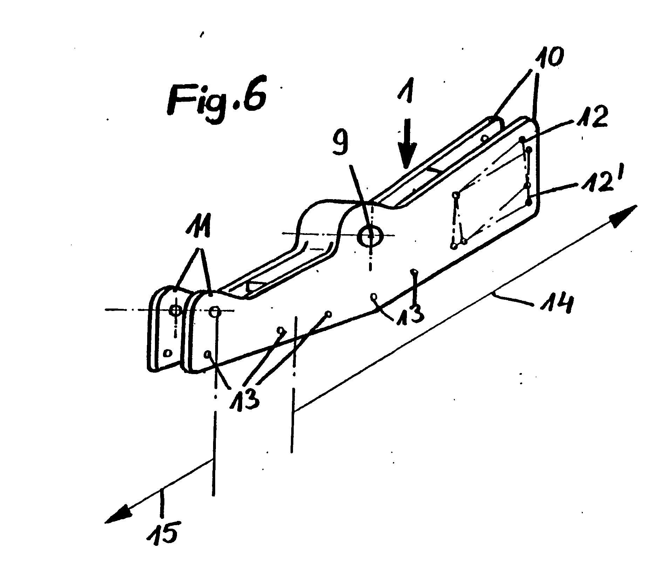

In Fig. 6 ist der hydrostatisch oder über eine Zapfwelle angetriebene rotierende Balken 1 schaubildlich dargestellt. Der Balken 1 besitzt in etwa mittig ein Lager 9, an dem der Antrieb 4 angreift. Zu beiden Seiten des Lagers 9 befinden sich im Abstand zueinander Wangen 10 bzw. 11. An den Wangen 10 sind Bohrbilder 12 bzw. 12' vorgesehen, um verschiedene Werkzeuge 2 bei Bedarf entsprechend dem gebrauchten Schnittwinkel vorzusehen. Weiterhin sind eine Anzahl von Bohrungen 13 vorhanden, um weitere Folgebearbeitungswerkzeuge anzubringen. In Fig. 6 ist mit dem Pfeil 14 der Abbruchlockerungsbereich und mit dem Pfeil 15 der Aufbruchlockerungsbereich gekennzeichnet.

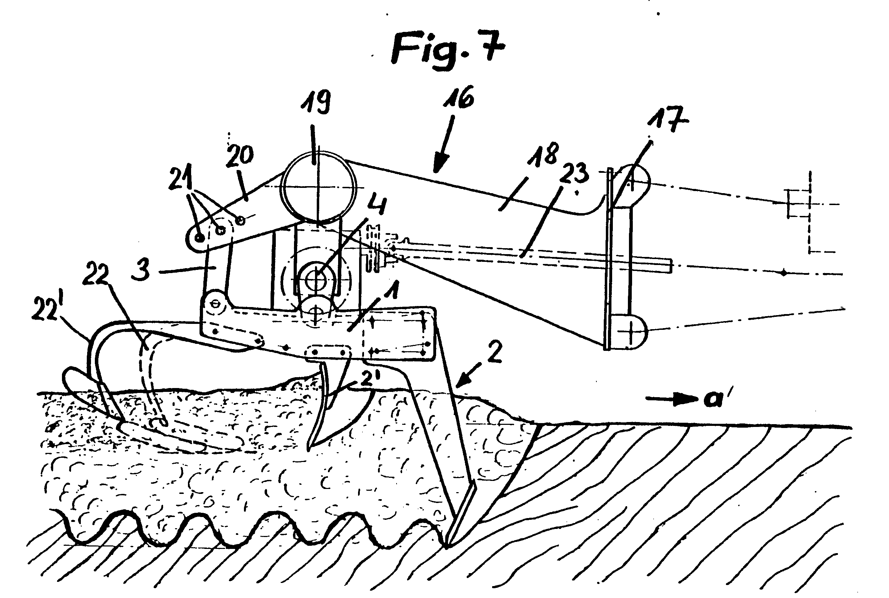

Die gesamte Vorrichtung ist in Fig. 7 dargestellt. Zum Anbau der Vorrichtung an ein Zugfahrzeug dient eine Halterung 16, die eine Frontplatte 17 aufweist, an der Seitenwangen 18 befestigt sind, die ihrerseits an einem Querträger 19 angeordnet sind, der in dem gezeigten Ausführungsbeispiel als Rohr ausgebildet ist, wobei nach der anderen Seite hin weitere Seitenwangen 20 angeordnet sind. Die Anordnung dieses Rahmens 16 an einem Fahrzeug kann mit Hilfe bekannter Dreipunktarme oder Parallelogrammsysteme über entsprechende Lagerstellen erfolgen. Am Querträger 19 ist der Antrieb 4 und damit auch der Balken 1 aufgehängt, wobei weiterhin eine Halterung des Balkens 1 an den Seitenwangen 20 über den Lenker 3 erfolgt. An den Wengen 20 sind verschiedene Bohrungen 21 angebracht, so daß durch eine entsprechende Verbindung des Lenkers 3 die Bewegung des Balkens 1 beeinflußt werden kann. Die Aufhängepositionen 21 können auch stufenlos verstellbar ausgeführt werden. Die Wangen 20 sind zum Abbau von Spannungsspitzen quer zur Fahrtrichtung bewußt labil, d.h. seitliche Schwingungen sind erwünscht, und in vertikaler Richtung stabil ausgeführt.

Am Balken 1 sind verschiedene Werkzeuge 2 angebracht, wobei das in Fahrtrichtung a' vorderste Werkzeug zur Tieflockerung nach dem Abbruchsystem dient, des nachgeordnete Werkzeug 2' zur Oberflächenbearbeitung und zum Abstechen bzw. Zerkleinern der Ernterückstände nach dem Abbruchsystem vorhanden ist. Schließlich sind noch Eggenzinken 22 zur Oberflächenfeinbearbeitung und ein Gänsefußschar 22' zur Bearbeitung nach dem Aufbruchsystem vorhanden. Der Antrieb 4 ist über eine Zapfwelle 23 mit dem Fahrzeug verbunden.

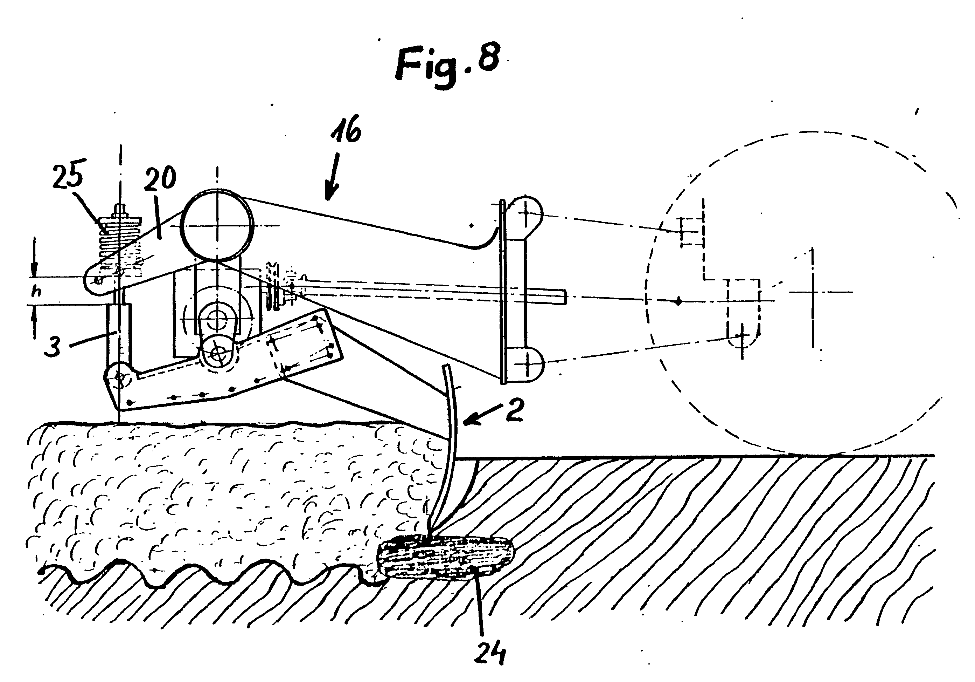

Stößt das Werkzeug 2 auf einen Stein 24 oder auf ein anderes Hindernis, dann ist gemäß Fig. 8 eine Überlastsicherung vorgesehen, bestehend aus einer Spiralfeder 25 oder einem Hydrozylinder mit Dämpfungseinrichtungsglied oder einer Gasfeder. Diese Dämpfungseinrichtung 25 befindet sich zwischen der Lasche 3 und den Wangen 20 des Trägers 16. Es empfiehlt sich hierbei, die Charakteristik sehr flach zu wählen, damit die Antriebselemente nicht mit zu hohen Spitzenmomenten belastet werden und die damit verbundene Hubkraft in Grenzen bleibt. Der Federweg h der Überlastsicherung 25 ist abhängig von der Lage des Hindernisses. Das Hindernis wird lediglich mit einer bestimmten Kraft so lange beaufschlagt, bis die Kurbelwelle des Antriebes 4 beim Erreichen eines bestimmten Kurbelwinkels das Werkzeug 2 wieder abhebt. So tastet sich das Werkzeug über das Hindernis, das im Boden verbleibt und es wird das Werkzeug 2 ohne Verschleiß und Bruchgefahr abgesichert.

Bei Geräten ohne Überlastsicherung besteht die Sicherung darin, daß in Verbindung mit einer Schwimmhydraulik einfach das ganze Gerät bei Überlast bzw, beim Auftreffen auf ein Hindernis aus dem Boden gehoben wird. Es empfiehlt sich jedoch, einen solchen Weg nur in Verbindung mit einem massearmen Zwei-Zahngerät zu wählen, weil solche Geräte ohnehin für beschränkte Tiefen mit weniger Hindernissen verwendet werden.

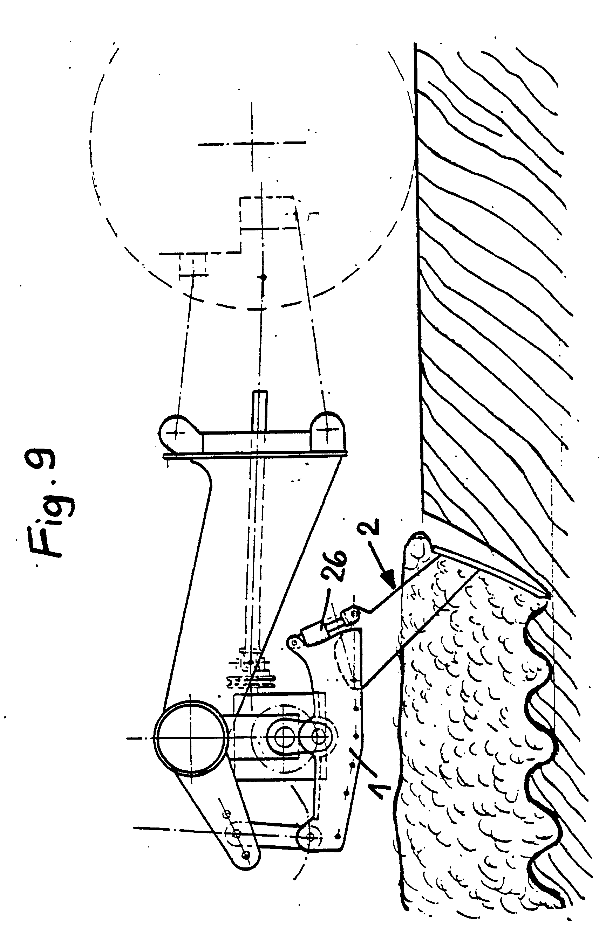

Bei der weiteren Ausführungsform nach Fig. 9 ist ein Federglied 26 zwischen dem Balken 1 und den am Balken 1 gelenkig eingebauten Werkzeug 2 vorgesehen. Damit ist eine Überlastsicherung gegeben.

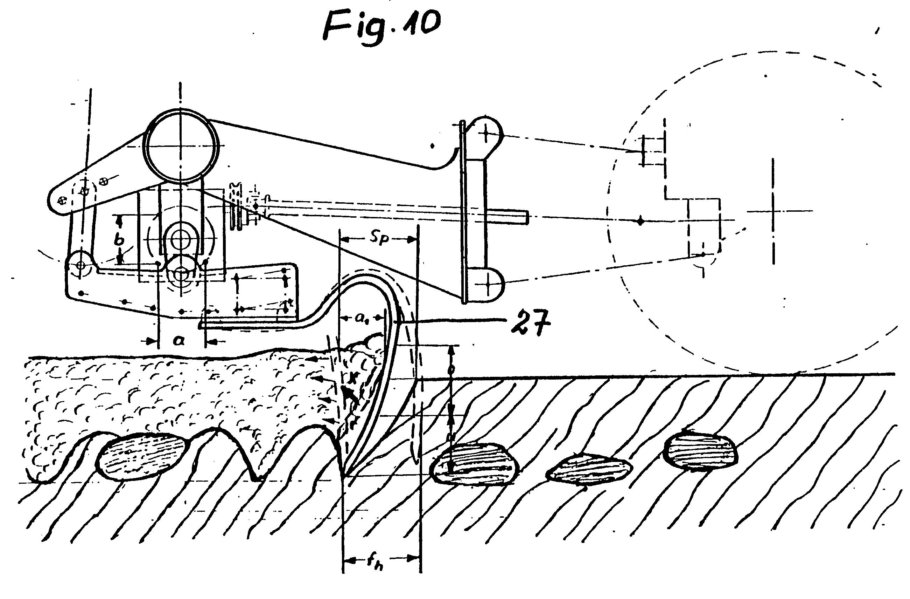

Bei der weiteren in Fig. 10 gezeigten Ausführungsform ist am Balken 1 ein federndes Werkzeug 27 (Federschar) befestigt. Es besitzt Federungseigenschaften in horizontaler und vertikaler Richtung. Da das Werkzeug in horizontaler Richtung elastischer ist als in vertikaler Richtung (siehe fh) ist davon auszugehen, daß die Spitze in der Gegend des unteren Totpunktes im Bereich des Kurbelbereichs a fast stehenbleibt. Während des Kurbelweges a ergibt sich im oberen Scharbereich o eine Verschiebung a1, d.h. eine verstärkte Schub- und Lockerungswirkung in horizontaler Richtung. Ferner ist der in diesem Augenblick entstehende Erdspalt Sp größer als bei anderen bisher aufgeführten Werkzeugen und eignet sich sehr gut zum Eiblasen von Düngemitteln. Im Kurbelbereich b wird dann das Schar angehoben, so daß im unteren Scharbereich Federenergie frei wird, die in Pfeilrichtung x einen zusätzlichen Lockerungseffekt auslöst. Unter extremen Bedingungen kann eine allseitige Sicherung in Form einer Kombination mit einer bereits beschriebenen Pendelhebelsicherung (Fig. 8 und 9) erfolgen.

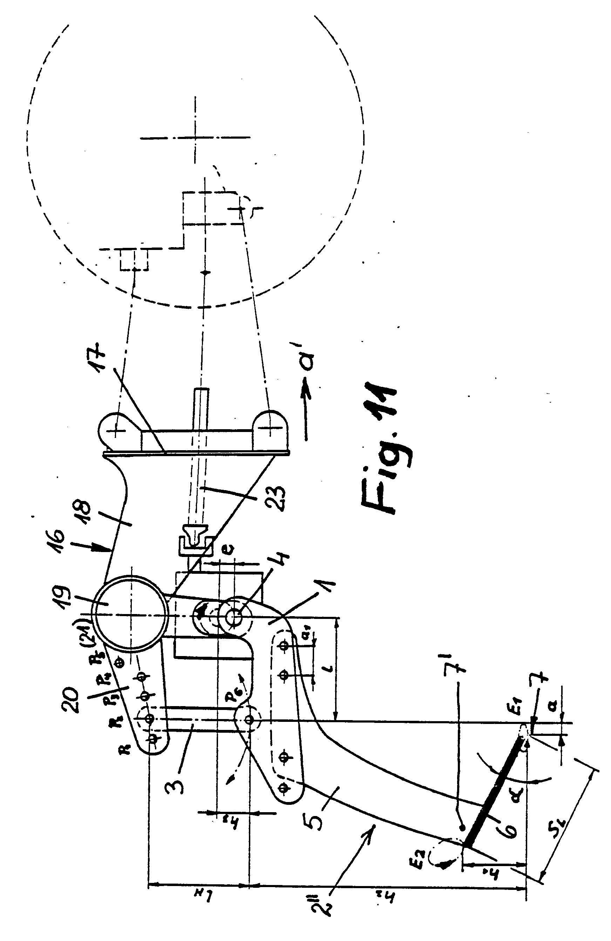

In Verbindung mit Figur 1 wurde erläutert, daß das Werkzeug 2'' nach den Aufbruchlockerungssystem arbeitet. In Figur 11 ist eine konstruktive Ausführungsform für eine derartige Einrichtung dargestellt, wobei ein Kurbeltrieb 4 mit der Exzentrizität e einen Rotationsbalken 1 antreibt, der ähnlich wie in Figur 6 die unterschiedlichsten Aufnahmemöglichkeiten besitzt. Ein Hebel 3 mit der Länge $lh$, der in den Positionen P1 bis P5 aufgehängt werden kann, sorgt dafür, daß der Gelenkpunkt P6 eine fast horizontal gerichtete bzw. leicht geneigte kurzhubige Bewegung ausführt. Der im Rotationsbalken 1 befestigte Holm 5 besitzt am unteren Ende ein Schar 7. Die Rotationskinematik wirkt sich auf die Scharbewegungen so aus, daß sich in Abhängigkeit zu $h1$, $h2$, $h3$, $1H$, $a$, P1, P2, P3, P4, P5 oder Px sowie e die unterschiedlichsten Ellipsen E1 bzw. E2 ergeben.

Grundsätzlich muß jedoch die Kinematik so gewählt werden, daß sich E1 flach und mehr horizontal und E2 großflächiger und mehr vertikal orientiert. Dadurch ist gewährleistet, daß von der Spitze eine stechende und vom Bereich des Scharendes 7' eine hebende, nach oben verdrängende Wirkung ausgeht. Ein großer Einfluß auf die Lockerungsintensität geht auch noch vom Winkel $a$, der Scharlänge $S1$, der Hohe $h1$ und der Scharbreite aus. Das Maß a kann durch Versetzen des Holmes 5 um $a1$ oder durch Befestigung an anderen Positionen ebenfalls beeinflußt werden. Die Überlagerungen von E1 und E2 mit der Fahrgeschwindigkeit eribgt auch hier Zykloiden, so daß das Einstechen der Scharspitze 7 mit hoher Geschwindigkeit und bei kleinem Winkel $a$ erfolgt und das Aufbrechen bei fast stehender Scharspitze 7 und nach oben sich bewegendem Scharende. Je nach Einsatz können jedoch auch andere Relationen gewählt werden. Wird die Achslast des Zugmittels aufgrund der auf die Schar-fläche nach unten wirkenden Kräfte zu groß, dann können Stützräder an geeigneter Stelle angebracht werden.

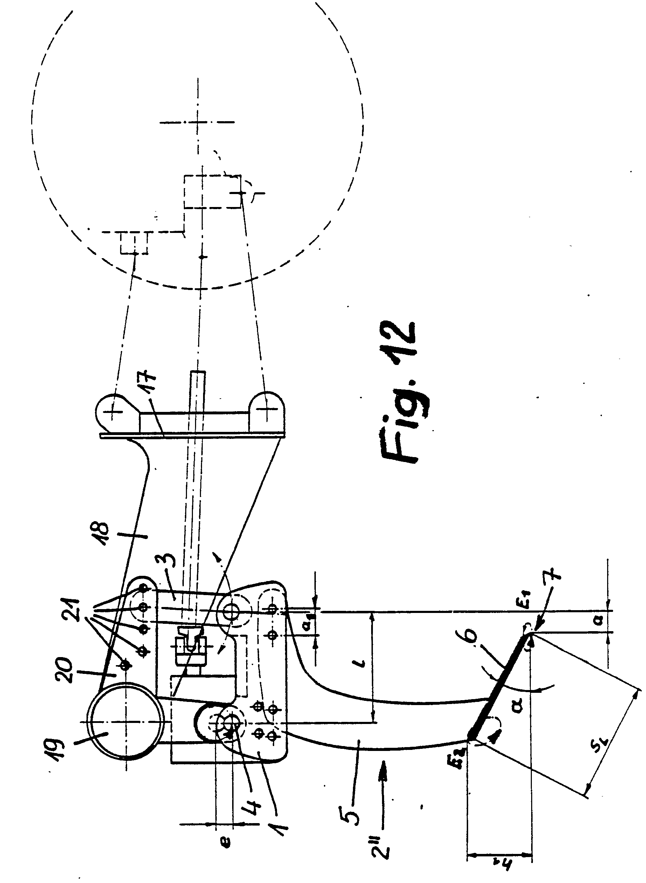

Die Figur 12 zeigt eine ähnliche Ausführungsform der in Figur 11 dargestellen Vorrichtung, wobei die Seitenwangen 20 um etwa 180° versetzt, am Querträger 19 angeordnet sind. Auch hier verhält sich die Werkzeugkinematik ähnlich wie vorstehend beschrieben, wobei sich jedoch der Drehsinn des Antriebes umkehrt.

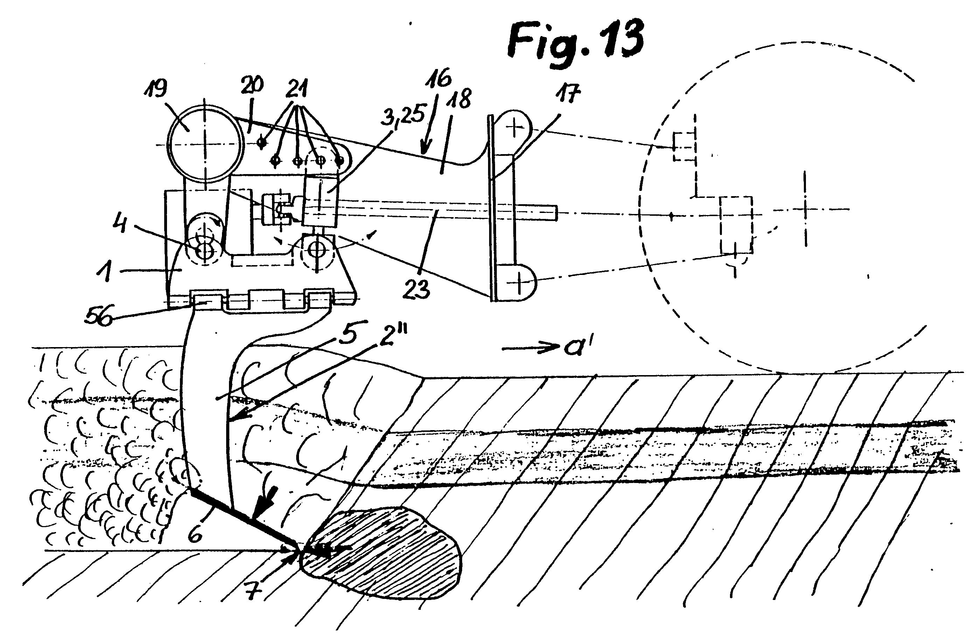

Die in Figur 13 dargestellte Vorrichtung ist mit einer Steinsicherung längs und quer zur Fahrtrichtung versehen. Hierbei erfolgt die Längssicherung über ein zwischen den Seitenwangen 20 und dem Balken 1 vorgespanntes elastisches Glied 25. Zur Quersicherung ist der Holm 5 am Balken 1 mittels einer scharnierartigen Einrichtung 56 seitenpendelnd aufgehängt, so daß die Schar 6 im Normalbetrieb, bedingt durch die Erdreaktionskrafte vertikal stabilisiert wird und beim Auftreffen auf ein Hindernis seitlich ausweicht. Eine seitliche Steinsicherung wird aber auch dadurch erreicht, daß der Holm 5 in Fahrtrichtung a stabil und seitlich labil bzw. federnd ausgebildet wird. Bei einer Längssicherung gemäß der Ausführungsform nach Figur 11 sind die Kräfte in Hebel 3 umgekehrt wirksam.

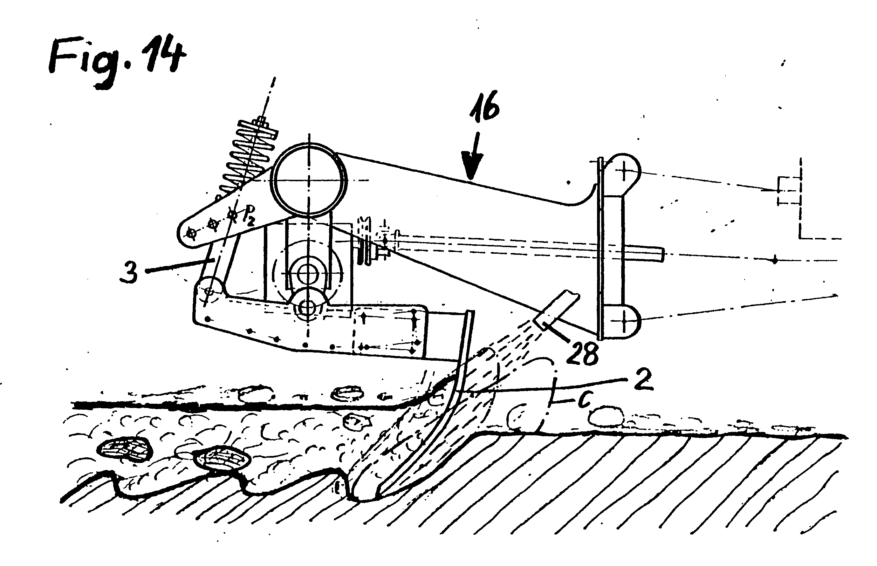

Bei der in Fig. 14 gezeigten Ausführungsform ist eine Einrichtung 28 zum zuführen von Zusatzmitteln, wie Düngemitteln angedeutet, die am Rahmen 16 befestigt werden kann. Diese Ausführungsform ist insbesondere beim Einsatz im Wald von Vorteil, wenn Meliorationsdünger möglichst schnell und gut verteilt en die Wurzeln herangebracht werden soll. Dies geschieht dadurch, daß ein stark nach hinten gekrümmtes Werkzeug 2 in den Boden einstict, ihn anhebt und im Augenblick der Spaltentstehung der Dünger eingeblasen wird. Dazu ist der Lenker 3 an dem Gelenkpunkt P2 befestigt, um einen möglichst flachen Kurvenverlauf zu erhalten. Dieser Kurvenverlauf c ist strichpunktiert eingezeichnet.

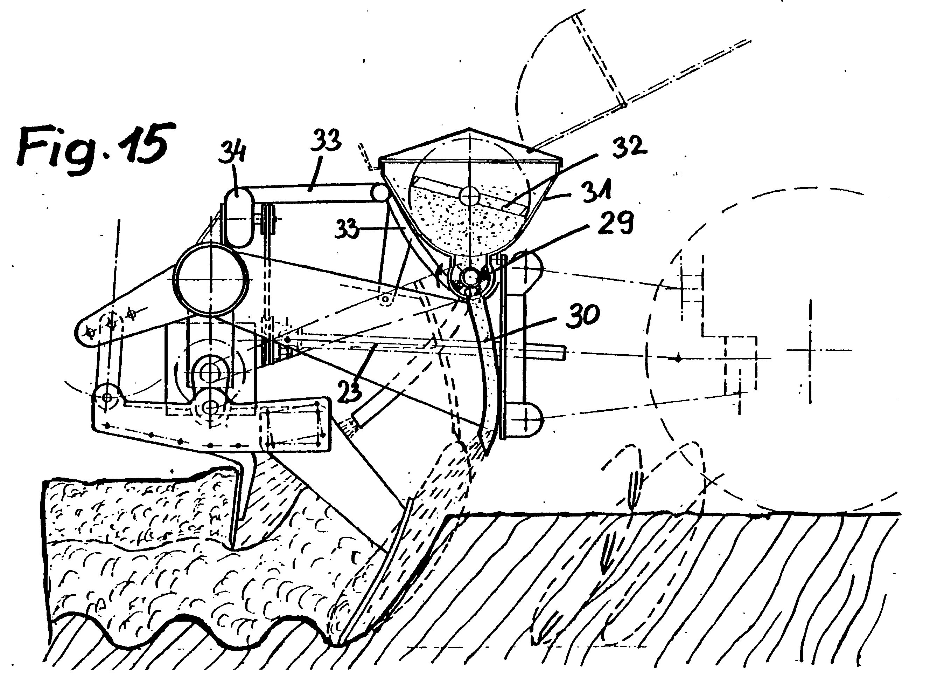

In Fig. 15 ist eine derartige Einrichtung 28 zum Zuführen derartiger Zusatzmittel dargestellt. Die Einrichtung 28 besitzt eine Dosiereinrichtung 29, die beispielsweise als Zellradschleuse ausgebildet ist, an die sich ein Zuführrohr 30 anschließt. Oberhalb der Dosiereinrichtung 29 befindet sich ein Behälter 31 mit einem Rührwerk 32. Weiterhin ist die Dosiereinrichtung 29 über Luftzuführungen 33 mit einem Gebläse 34 verbunden, so daß das Mittel mit entsprechendem Druck ausgebracht werden kann. Der Antrieb des Gebläses 34 erfolgt beispielsweise über die Zapfwelle 23. Des Rohr 30 ist hierbei um die Dosiereinrichtung 29 verschwenkbar, wie dies in Fig. 15 angedeutet ist. Diese Einrichtung 28 kann als Baukastenteil am Geräterahmen 16 befestigt werden. Es gibt hierbei die Möglichkeit, den Dünger stoßweise während des bei jedem Einstich entstehenden Erdspaltes einzublasen oder kontinuierlich unter Inkaufnahme, daß in der Phase zwischen 6 und 1 (Fig. 3 und 4) Dünger auf die Oberfläche geblasen wird. Bei stoßweiser Einblasung muß gewährleistet sein, daß genau in den Phasen 6 bis 1 die Düngerzufuhr unterbrochen wird, d.h. das Übersetzungsverhältnis zwischen Kurbelwelle und Schleusenwelle muß bei einer Unterbrechernoppe 35 1:1, bei zwei Unterbrechernoppen 35 2:1 usw. sein. Ferner müssen die Unterbrechernoppen 35 in der Phase 6 bis 1 den Ausgang 36 überdecken. Die Dosierung erfolgt über einen Dosierschieber 37 durch entsprechende Einstellung des Öffnungsquerschnittes. Bei der kontinuierlichen Beschickung besitzt das Zellrad 29 bzw. Dosierrand nur Mitnehmernoppen. Die Mengenregelung kann hier ebenfalls mittels eines Dosierschiebers erfolgen oder über eine stufenlose Drehzahlregelung, bei der der Dosierschieber entfallen kann. Eine Abhängigkeit zur Kurbelwellendrehzahl ist hier nicht erforderlich, jedoch eine Koppelung mit einer fahrgeschwindigkeitabhängigen Regelung. Ein Behälter mit kontinuierlicher Beschickung kann auch auf dem Trägerfahrzeug untergebracht sein.

Da die Luft quer zur Schleuse 29 und somit auch quer zu den Mitnehmernoppen 35' des Dosierrades eingeblasen wird, wird ein ständiger Reinigungseffekt erzeugt und eine Verstopfung der Schleuse vermieden. Ferner kann des Rohr 30 kurz und mit nur einem großen Bogen versehen werden, was ebenfalls für einen störungsfreien Betrieb spricht. Das Rohr 30 kann auch als Schlauch ausgeführt sein. In diesem Fall ist in Verbindung mit einer verstellbaren Befestigung eine optimale Ausrichtung auf den Erdspalt möglich. Ferner bietet sich bei Bedarf die Möglichkeit, zwischen den Blasrohren 30 für die Tiefenwerkzeuge 2 Blasrohre z.B. 30' für die Oberbodenwerkzeuge anzubringen.

Zur Vermeidung von Luftströmungen in den Düngerbehälter 31 müssen die Noppen 35' Dicht- und Förderfunktion zugleich haben. Dies ist dadurch gewährleistet, daß elastisches und beständiges Material verwendet wird. Es sind auch Lösungen denkbar, die den Dünger ohne Luftgebläse durch gezielten freien Fall oder über Wurfeinrichtungen in die Erdspalte einbringen.

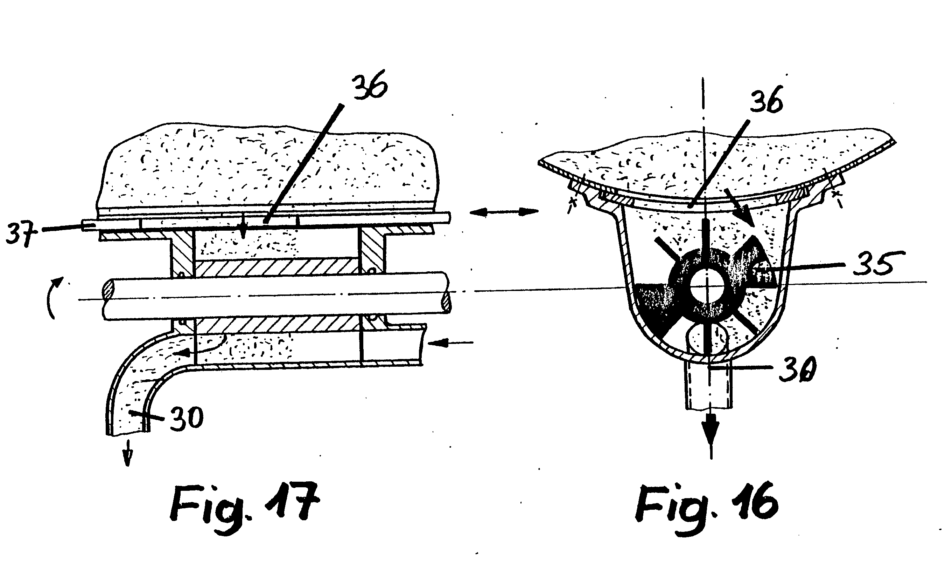

Die in den Figuren 15 bis 17 dargestellte Einrichtung zum Einbringen von Düngemitteln und Zusatzstoffen kann in vielen Fällen stark vereinfacht ausgeführt werden. Beim Ausbringen von Granulatstoffen ist ein Luftgebläse nicht erforderlich.

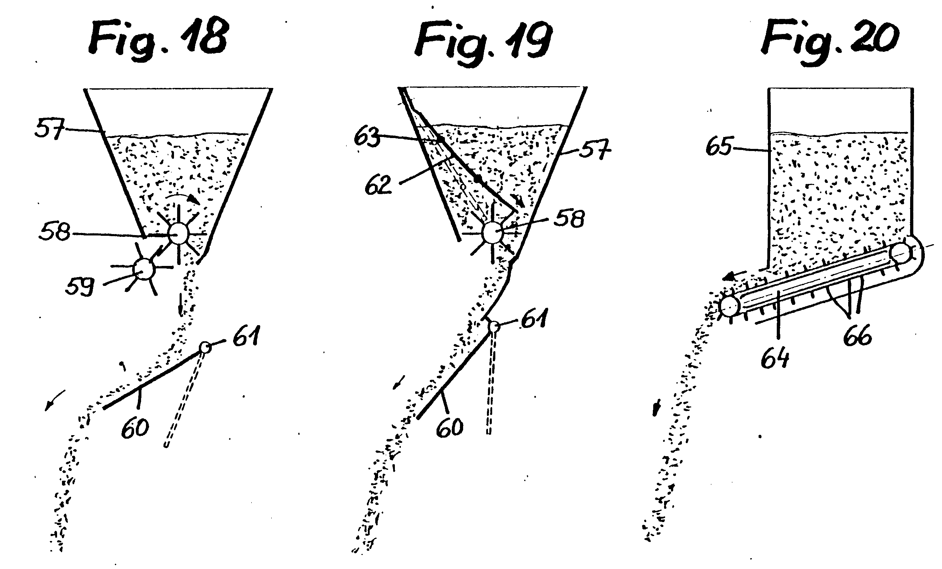

Bei der in Figur 18 gezeigten Ausführungsform befindet sich in der Bodenöffnung des Behälters 57 eine Zellradschleuse 58, die beispielsweise über ein Stützrad fahrgeschwindigkeitsabhängig angetrieben werden kann. Unterhalb der Zellradschleuse 58 befindet sich ein, an einem Gelenkpunkt 61 befestigtes, im Ablenkwinkel verstellbares Prallblech 60, wobei durch eine Richtungskorrektur die Stoffe an die gewünschte Stelle geleitet werden. Neben der Zellradschleuse 58, in diese eingreifend, befindet sich ein weiteres Zellrad 59, um Verstopfungen beim Ausbringen der Stoffe zu vermeiden.

Bei der in Figur 19 gezeigten Ausführungsform befindet sich im Behälter eine Rüttelvorrichtung 62, die als eine Art Blattfeder ausgebildet ist, wobei diese Blattfeder seitlich Rüttelzinken 63 aufweist, so daß in dem Behälter 57 eine Brückenbildung vermieden wird.

Eine weitere Ausführungsform der Vorrichtung ist in Figur 20 dargestellt, wobei hier ein Förderband 64 mit Noppen 66 die Förder- und Dosierfunktion übernimmt. Es besteht hier die Möglichkeit, den Behälter 65 rechteckförmig auszubilden, so daß Brückenbildungen von vornherein auszuschließen sind. Der Antrieb des Förderbandes 64 erfolgt fahrgeschwindigkeitsabhängig, wobei ein stufenlos regelbares Zwischengetriebe die Einstellung der Streudichte gestattet. Zur Durchführung von Richtungskorrekturen können im Fallstrom ebenfalls Prallbleche eingebaut werden. Die in den Figuren 18 bis 20 dargestellten Vorrichtungen sind auch gegen bröcklige Zusatzstoffe und Düngemittel unempfindlich.

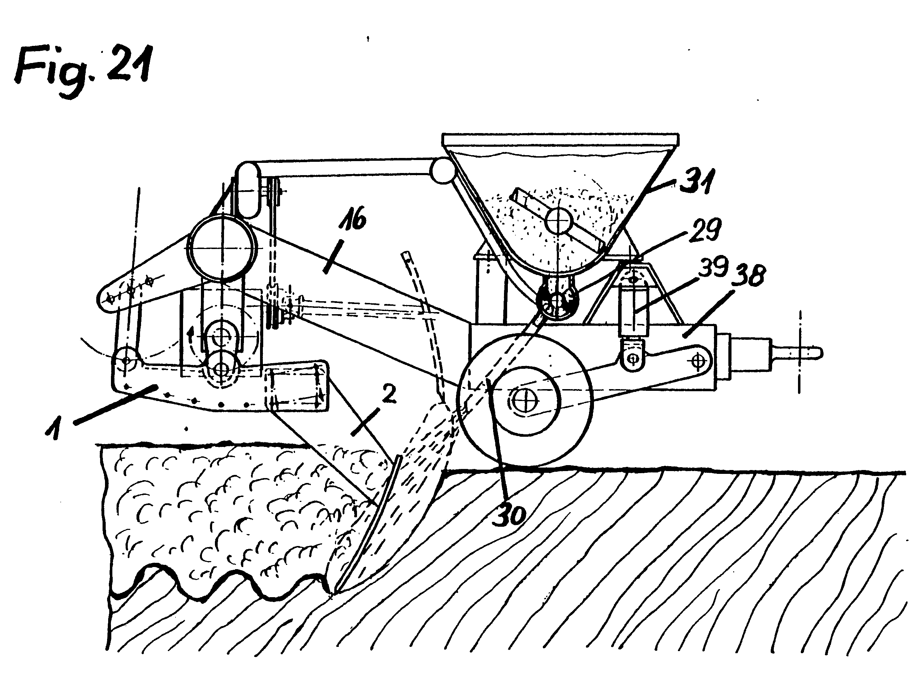

Bei der in Fig. 21 dargestellten Ausführungsform der Vorrichtung sind die einzelnen Teile, nämlich der Balken 1 mit seinem Rahmen 16 und der Dosiereinrichtung 29 mit dem Behälter 31 und dem Zuführrohr 30 an einem Nachlauffahrzeug 38 aufgebaut, wobei der Behälter 31 so angeordnet ist, daß er als Gewichtsausgleich zum Lockerungsaggregat 2 wirkt. Die Auf- und Abbewegung erfolgt mit Hilfe eines oder auch zweier Hydraulikzylinder 39 über die Bordhydraulik des Zugmittels oder über eine eigene Hydraulik, die ferngesteuert vom Fahrersitz des Schleppers aus betätigt werden kann.

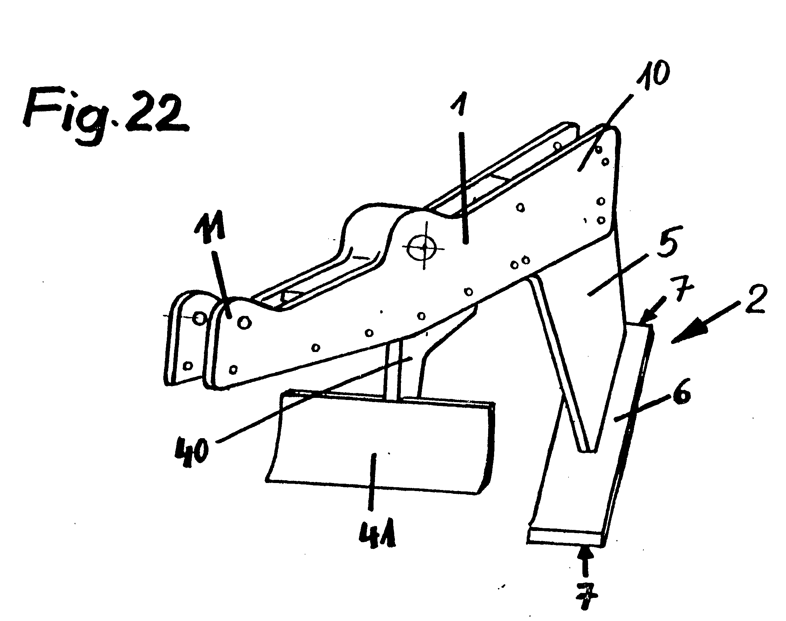

In den weiteren Fig. 22 bis 28 sind verschiedene Werkzeugarten und Kombinationen an dem Balken 1 dargestellt. Zum Zwecke einer überlappenden Wirkung können bei Mehrbalkensystemen auch unterschiedliche Werkzeugkombinationen nebeneinander arbeiten. Bei der in Fig. 22 gezeigten Anordnung ist im Bereich 10 des Balkens 1 ein Werkzeug 2 angebracht, das in etwa die Form aufweist, wie das in Fig. 4 gezeigte Werkzeug mit einem Holm 5 und Schar 6 zur Tieflockerung bzw. Tiefdüngung, wobei für den Oberbodenbereich ein Folgebearbeitungswerkzeug 40 vorgesehen ist, das einen breiten Spalten 41 aufweist, der gute Eigenschaften besitzt, Ernterückstände zu durchschneiden und in den Boden einzuarbeiten. Weiterhin kann ähnlich wie bei der Tiefdüngung im Oberbodenbereich Meliorationsdünger hinter dem Erdspalt oder auf den Oberboden Dünger geblasen und eingearbeitet werden. Im Oberbodenbereich ist das Schar 6 bewußt so angeordnet, daß ein Wenden bzw. Mischen des Oberbodens stattfindet.

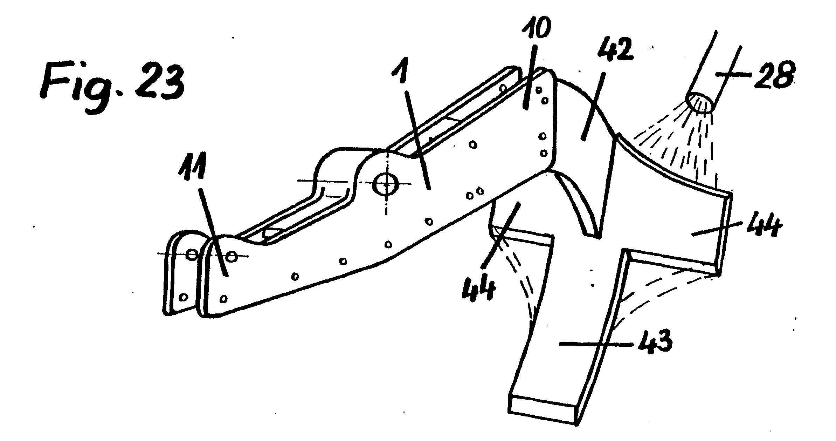

Bei der weiteren in Fig. 23 dargestellten Ausführungsform ist das Werkzeug 42 derart geformt, daß ein tiefeindringendes Teil 43 vorgesehen ist. An diesem Teil 43 sind im oberen Bereich zusätzliche Seitenschare 44 vorgesehen, um die Öffnung des Spaltes zum Einbringen von Dünger zu vergrößern. Gleichzeitig wird durch eine solche Lösung eine Oberbodenbearbeitung und ein sicheres Durchtrennen der Ernterückstände erreicht.

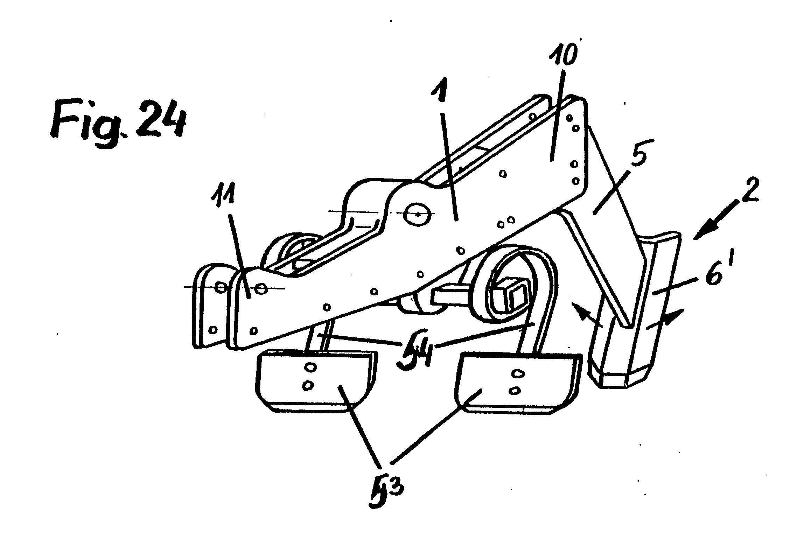

Bei der Ausführungsform gemäß Fig. 24 ist das Werkzeug 2 gegenüber der Ausführungsform in Fig. 22 etwas abgewandelt, wobei das Tieflockerungsschar 6' seitlich abgekantet ist und damit der Effekt einer besseren Seitenwirkung verbunden ist. Weiterhin sind etwa in der Mitte des Balkens 1 Oberbodenschare 53 angeordnet, die durch Federsicherungen 54 gegen Überlast geschützt sind. An den Federn 54 lassen sich die unterschiedlichsten Werkzeuge wie Grubberschare, Gänsefußschare usw. anbringen.

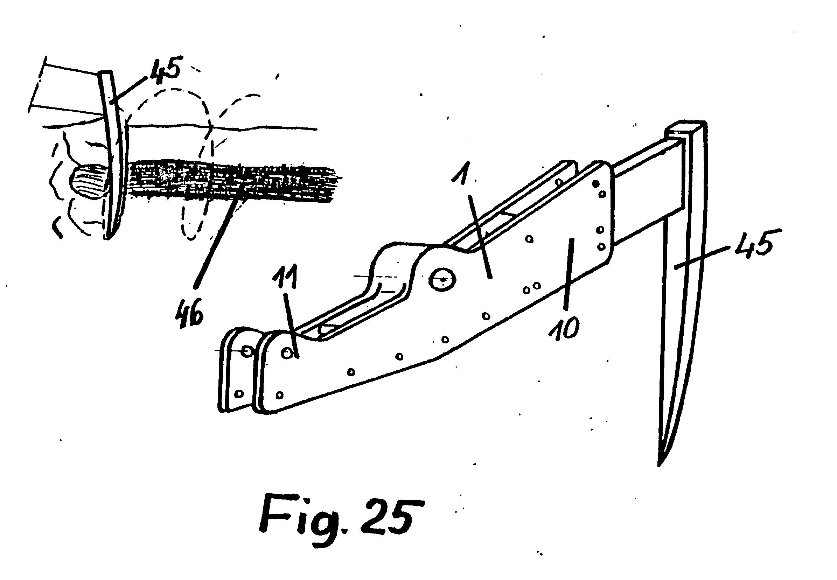

Nach der Ausführungsform in Fig. 25 ist an dem Balken 1 ein Tiefenzinken 45 angebracht. Ein solches Werkzeug ist geeignet, extrem harte Böden grob vorzulockern, um z.B. eine gute Frosteinwirkung zu ermöglichen. Das Werkzeug kann hierbei sehr gut in den Verdichtungshorizont 46 eindringen und somit Staunässe beseitigen. Durch sehr grobes Durchstoßen und Aufbrechen dieser Schichten wird der Wasserfluß zur Tiefe hin sichergestellt. Die Fahrgeschwindigkeit kann in dieser Situation wesentlich höher sein als bei der Feinlockerung, was einer entsprechend höheren Flächenleistung entspricht. Durch Überlagerung der höheren Fahrgeschwindigkeit mit der Rotationsellipse ergibt sich ein resultierender Kurvenverlauf, wie in dem bei Fig. 25 dargestellten Bild erwichtlich. Eine entsprechend steile Stellung des Werkzeuges ist wie in der Fig. 25 gezeigt, zu berücksichtigen.

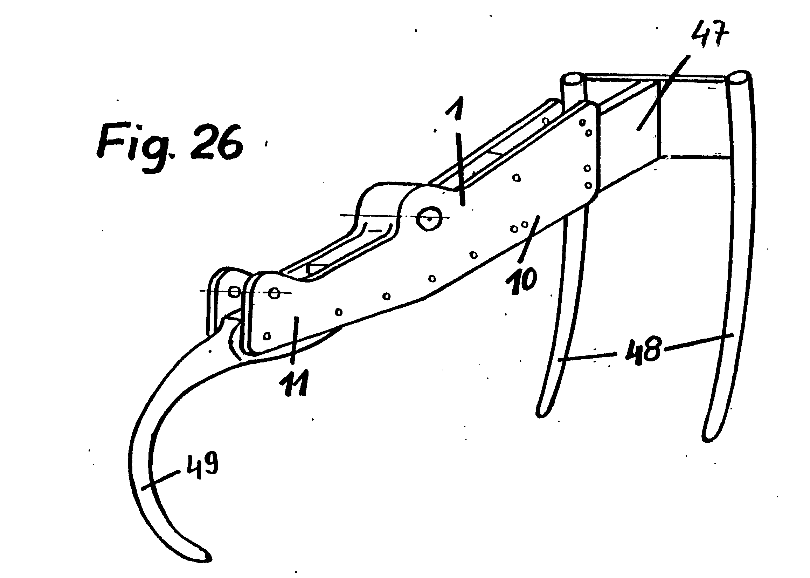

Das in Fig. 26 dargestellte Werkzeug 47 weist zwei Tiefenzinken 48 im Abbruchbereich auf sowie einen Nachlaufzinken 49 im Aufbruchbereich und ist für eine mittelgrobe Bodenbearbeitung gedacht.

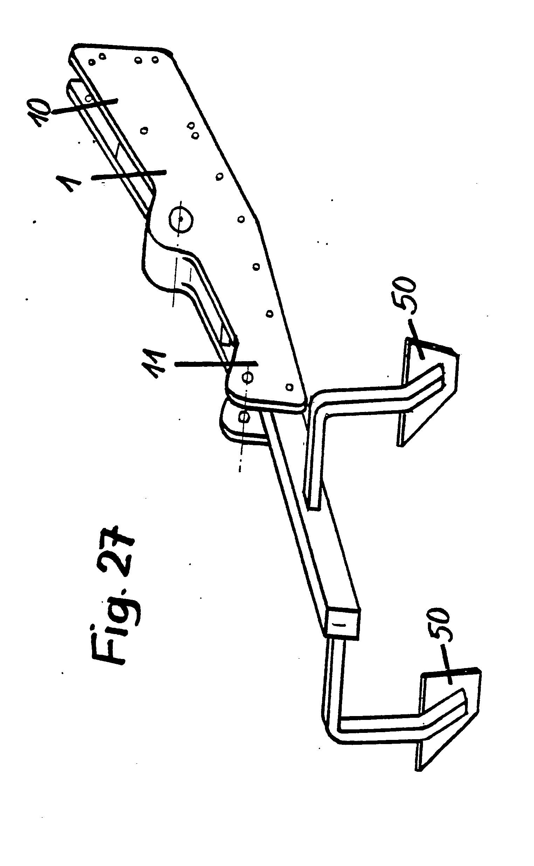

Die Fig. 27 zeigt einen Rotationsbalken 1 mit zwei versetzt angeordneten Scharen 50 im Aufbruchbereich. Durch den Längenversatz ist speziell bei Mehrbalkensystemen, bei dem die Schare im Zick-Zack angeordnet sind, eine bessere Durchlässigkeit gewährleistet.

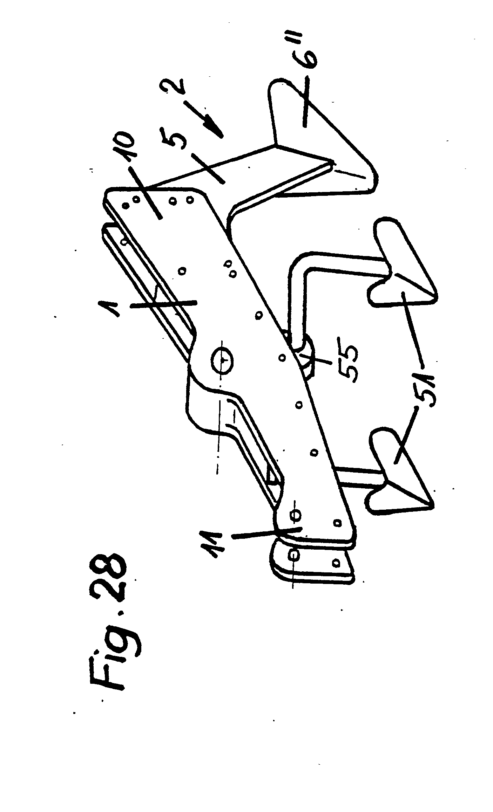

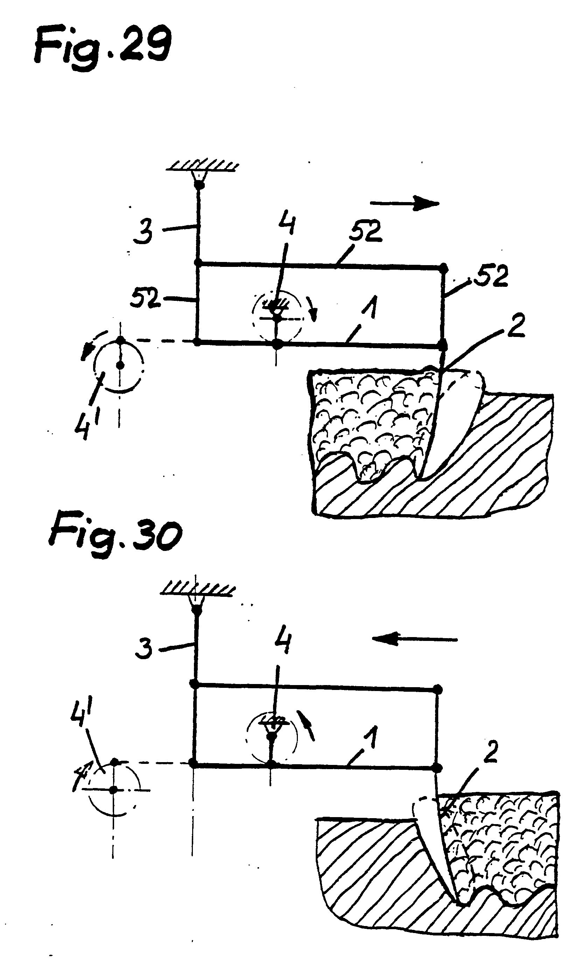

Die Ausführungsform nach Fig. 28 zeigt die Anordnung eines Werkzeuges 2 zur Tiefenbodenbearbeitung mit einem Holm 5 und Gänsefußschare 6''. Im mittleren Bereich des Balkens 1 sind weitere Gänsefußschare 51 angeordnet für die Oberbodenbearbeitung, wobei sich eine solche Werkzeugkombination zur Doppelhublockerung und für Einsätze, wo Mischeffekte erforderlich sind, eignet. Die mittige Befestigung 55 des Bügels für die Gansefußschare kann auch seitenelastisch bzw. seitenpendelnd erfolgen. Dadurch besteht ein optimaler Schutz beim Auftreffen einer Seite auf ein Hindernis. Die Figuren 29 und 30 zeigen eine Abwandlung der Ausführungsform nach den Fig. 1 und 2 für das Rotationsbalkensystem, wobei der Balken 1 und das Werkzeug 2 über zusätzliche Balken 52 entsprechend einem Parallelogramm verbunden sind. Diese Systeme sind jedoch aufwendiger und empfindlicher, da statt vier Gelenken sieben Gelenke je Werkzeug kombination benötigt werden. Die dargestellte Rotationsellipse ist über Hebelproportionen, Exzentrizität und Exzenterlage beliebig beeinflußbar. Hierbei kann der Antreib 4 auch außerhalb angeordnet sein, wie dies durch den Antrieb 4' gekennzeichnet ist. Die Fahrtrichtung kenn wie in Fig. 29 gewählt werden, sie kann aber auch entgegengesetzt gerichtet sein, wie in Fig. 30 wobei diese Lösung in Bezug auf Folgebearbeitungswerkzeuge und Düngung große Nachteile, jedoch bezüglich der Durchlässigkeit ihre Vorteile hat, da hinter den Werkzeugen keine sperrigen Bauteile folgen.

Bei Traktoren neuerer Bauart mit frontseitigem Zapfwellenantrieb ist es auch möglich, aus Gewichtsausgleich front- und heckseitig zugleich derartige Geräte anzubringen.

**Patentansprüche**

1. Verfahren zur Auflockerung von Böden im Unter- und Oberbodenbereich unter Verwendung von Grabwerkzeugen, mit denen der Boden aufgebrochen wird, wobei die Grabkante des Grabwerkzeuges in einer ellipsenförmigen Bewegung geführt wird und dieser Bewegung als Fahrbewegung eine geradlinige Bewegung überlagert wird und daß die längere Achse der Ellipse von der Bodenoberfläche in den Boden gerichtet ist und eine Neigung zur Fahrtrichtung aufweist, dadurch gekennzeichnet, daß das Werkzeug beim Eindringen in den Boden im Oberbodenbereich entgegen der Fahrtrichtung einen stärkeren Kippweg erfährt als an der Schneide und daß beim Ausheben des Werkzeuges der Boden im Oberbodenbereich entgegen der Fahrtrichtung stärker verdrängt wird als unten.

2. Verfahren nach Anspruch 1, dadurch gekennzeichnet, daß bei jedem Einstich des Werkzeuges Zusatzmittel wie Düngemittel in den entstehenden Erdspalt eingeblasen oder eingeworfen werden.

3. Verfahren nach Anspruch 1, dadurch gekennzeichnet, daß beim Einstechen des Werkzeuges eine Vorlockerung mit der Scharoberseite und beim Ausheben des Werkzeuges mit der Scharunterseite eine Feinlockerung durchgeführt wird.

4. Vorrichtung zum Durchführen des Verfahrens nach Anspruch 1 bis 3, bei dem ein sich in Fahrtrichtung erstreckender, als Träger für Grabwerkzeuge (2, 2', 2'') dienender Balken (1) über ein erstes quer zur Fahrtrichtung ausgerichtetes Gelenk (P4) an einem mit einem Zugfahrzeug fest verbundenen Gestell angelenkt und in einer sich in Fahrtrichtung erstreckenden senkrechten Ebene mit Hilfe eines über ein zweites Gelenk (P5) am Balken (1) angreifenden Kurbel oder Exzenterantriebs (4) um das erste Gelenk (P4) verschwenkbar antreibbar ist, dadurch gekennzeichnet, daß das erste Gelenk (P4) am unteren Ende eines Hebels (3) mit vorwählbarer Hebellänge ($l_5$, $l_5'$) angeordnet ist, dessen oberes Ende über ein drittes quer zur Fahrtrichtung ausgerichtetes Gelenk (P1...P3), an dem mit dem Zugfahrzeug fest verbundenen Gestell in einer vorwählbaren Position angelenkt ist, daß der Abstand des dritten Gelenks (P1...P3) von dem zweiten Gelenk (P5) kleiner ist als die Summe der Länge ($l_5$, $l_5'$) des Hebels (3) und des Abstands ($l_1$) des ersten Gelenks (P4) von dem zweiten Gelenk (P5), daß sich der Durchmesser des von dem Kurbelantrieb beschriebenen Kreises nicht mit der Verbindungslinie zwischen dem ersten Gelenk (P4) und dem dritten Gelenk (P1...P3) überschneidet und daß die Länge des Hebels (3) größer ist als der Radius des von dem Kurbelantrieb beschriebenen Kreises.

5. Vorrichtung nach Anspruch 4, dadurch gekennzeichnet, daß mehrere Grabwerkzeuge (2, 2', 2'') an dem Balken (1) vor und/oder nach dem Kurbel- oder Exzenterantrieb (4) angeordnet sind.

6. Vorrichtung nach Anspruch 4 und 5, dadurch gekennzeichnet, daß der Antrieb (4) hydrostatisch oder über eine Zapfwelle (23) des Zugfahrzeuges erfolgt.

7. Vorrichtung nach Anspruch 4 bis 6, dadurch gekennzeichnet, daß mehrere Balken (1) mit Werkzeugen (2, 2', 2'') nebeneinander über die Fahrbreite verteilt an einem Rahmen (16) gehaltert sind, der am Zugfahrzeug anbringbar ist.

8. Vorrichtung nach Anspruch 4 bis 7, dadurch gekennzeichnet, daß der Rahmen (16) an einer Frontplatte (17) befestigte Seitenwangen (18) aufweist, die an einem den Antrieb (4) und den Balken (1) halternden Querträger (19) angebracht sind und daß an dem Querträger (19) weitere Wangen (20) angeordnet sind, an denen der Balken (1) über Laschen (3) gelenkig aufgehängt ist.

9. Vorrichtung nach Anspruch 8, dadurch gekennzeichnet, daß an den Wangen (20) im Abstand und Höhe zum Querträger (19) verschiedene Bohrungen (21) für das Anbringen der Lasche (3) vorgesehen sind.

10. Vorrichtung nach Anspruch 8 und 9, dadurch gekennzeichnet, daß die Befestigungsposition der Lasche (3) an den Wangen (20) stufenlos verstellbar ist.

11. Vorrichtung nach einem der Ansprüche 4 bis 10, dadurch gekennzeichnet, daß die Wangen (18) zwischen Frontplatte (17) und Quertrager (19) quer zur Fahrtrichtung federn und in vertikaler Richtung stabil ausgebildet sind.

12. Vorrichtung nach Anspruch 4 bis 11, dadurch gekennzeichnet, daß der Balken (1) in etwa mittig ein Lager (9) für den Antrieb (4) aufweist, an dem beidseitig Wangen (10, 11) angeordnet sind, die zum Anbringen der Werkzeuge (2, 2', 2'') mit einem Bohrbild (12, 12') versehen sind.

13. Vorrichtung nach Anspruch 4 bis 12, dadurch gekennzeichnet, daß ein Grabwerkzeug (2'') mit einem Holm (5) und kurzem Schar (6) nach dem Antrieb (4) angeordnet ist.

14. Vorrichtung nach Anspruch 4 bis 13, dadurch gekennzeichnet, daß die Wangen (20) um etwa 180° verschwenkt in Fahrtrichtung (a) weisend an dem Querträger (19) befestigt sind.

15. Vorrichtung nach Anspruch 4 bis 14, dadurch gekennzeichnet, daß das Grabwerkzeug (2, 2', 2'') als Quersicherung pendelnd am Balken (1) aufgehängt ist.

16. Vorrichtung nach Anspruch 4 bis 15, dadurch gekennzeichnet, daß die Laschen (3) an den weiteren Wangen (20) des Rahmens (16) federnd an einem Federglied (25) abgestützt sind.

17. Vorrichtung nach Anspruch 4 bis 16, dadurch gekennzeichnet, daß das Werkzeug (2) einseitig am Balken (1) befestigt ist und an einem zweiten Punkt an einem Federglied (26) abgestützt ist.

18. Vorrichtung nach Anspruch 4 bis 17, dadurch gekennzeichnet, daß am Balken (1) ein federndes Werkzeug (27) befestigt ist.

19. Vorrichtung nach Anspruch 4 bis 18, dadurch gekennzeichnet, daß am Rahmen (16) eine Einrichtung (28) zum Zuführen von Zusatzmitteln wie Dungemitteln vorgesehen ist.

20. Vorrichtung nach Anspruch 19, dadurch gekennzeichnet, daß die Einrichtung (28) ein an einer Dosiereinrichtung (29) angeordnetes Zuführrohr (30) aufweist.

21. Vorrichtung nach Anspruch 19 und 20, dadurch gekennzeichnet, daß die Dosiereinrichtung (29) als Zellradschleuse ausgebildet ist, und mit der Dosiereinrichtung (29) eine an ein Gebläse (34) angeschlossene Luftzuführung (33) verbunden ist.

22. Vorrichtung nach Anspruch 19 bis 21, dadurch gekennzeichnet, daß oberhalb der Dosiereinrichtung (29) ein Behälter (31) mit einem Rührwerk (32) angeordnet ist.

23. Vorrichtung nach Anspruch 19 bis 22, dadurch gekennzeichnet, daß im Boden des Behälters (31) vor der Dosiereinrichtung (29) ein Dosierscheiber (37) angeordnet ist.

24. Vorrichtung nach Anspruch 19 bis 23, dadurch gekennzeichnet, daß im Behälterboden eine fahrgeschwindigkeitsabhängig angetriebene Zellradschleuse (58) angeordnet ist und unterhalb der Schleuse (58) ein stufenlos verstellbares Prallblech (60) vorgesehen ist.

25. Vorrichtung nach Anspruch 24, dadurch gekennzeichnet, daß mit dem Schleusenrad (58) ein weiteres Zellrad (59) im Eingriff ist.

26. Vorrichtung nach Anspruch 19 bis 25, dadurch gekennzeichnet, daß im Behälter (57) eine auf Blattfederbasis beruhende Rüttelvorrichtung (62) mit seitlichen Rüttelzinken (63) vorgesehen ist, die von den Stegen der Zellradschleuse (58) angetrieben ist.

27. Vorrichtung nach Anspruch 19 bis 26, dadurch gekennzeichnet, daß am Boden des Behälters (65) ein fahrgeschwindigkeitsabhängig angetriebenes Förderband (64) vorgesehen ist.

28. Vorrichtung nach Anspruch 4 bis 27, dadurch gekennzeichnet, daß der Rahmen (16) mit dem Balken (1) und der Dosiereinrichtung (29) an einem Nachlauffahrzeug (38) angeordnet sind.

29. Vorrichtung nach Anspruch 4 bis 28, dadurch gekennzeichnet, daß das Werkzeug (2) sichelförmig ausgebildet ist und beim Einstechen ein Freiwinkel an der Schneide (7) vorhanden ist, und eine gleichzeitige Verdrängung des Bodens speziell im Oberbodenbereich gegen die Fahrtrichtung erfolgt.

30. Vorrichtung nach einemder Ansprüche 4 bis 29, dadurch gekennzeichnet, daß das Werkzeug (2) einen kurzen Schar (6) mit untenseitiger und obenseitiger Schneide (7) aufweist, der an einem Holm (5) befestigt ist.

31. Vorrichtung nach einem der Ansprüche 4 bis 30, dadurch gekennzeichnet, daß am Balken (1) nach dem Lockerungswerkzeug (2) ein Spatenwerkzeug (40) angeordnet ist.

32. Vorrichtung nach einem der Ansprüche 4 bis 31, dadurch gekennzeichnet, daß an dem Lockerungswerkzeug (43) im oberen Bereich ein zusätzliches Seitenschar (44) angebracht ist.

33. Vorrichtung nach einem der Ansprüche 4 bis 32, dadurch gekennzeichnet, daß das Lockerungswerkzeug (2) seitlich abgekantet ist und daß nach diesem Werkzeug (2) an Federsicherungen (54) angeordnete Zusatzwerkzeuge (53) vorgesehen sind.

34. Vorrichtung nach einem der Ansprüche 4 bis 33, dadurch gekennzeichnet, daß als Lockerungswerkzeug ein Tiefenzinken (45) vorgesehen ist.

35. Vorrichtung nach Anspruch 34, dadurch gekennzeichnet, daß am Balken (1) mehrere Zinken (48, 49) angeordnet sind.

36. Vorrichtung nach einem der Ansprüche 4 bis 35, dadurch gekennzeichnet, daß im Aufbruchbereich des Balkens (1) zwei versetzt angeordnete Schare (50) vorgesehen sind.

37. Vorrichtung nach einem der Ansprüche 4 bis 36, dadurch gekennzeichnet, daß am Balken (1) für die Tiefen- und Oberbodenbearbeitung Gänsefußschare (6'', 51) angebracht sind.

38. Vorrichtung nach einem der Ansprüche 4 bis 37, dadurch gekennzeichnet, daß der Balken (1) an einem Parallelogrammhebelsystem (Fig. 29, 30) angeordnet ist.

**Revendications**

1. Procédé d'ameublissement des sols en profondeur et en surface avec utilisation des outils de labourage avec lesquels le sol est défoncé, l'arête de creusement de l'outil de labourage étant guidée en un mouvement elliptique auquel est superposé en tant que mouvement de translation un mouvement rectiligne, le grand axe de l'ellipse étant dirigé de la surface vers l'intérieur du sol et présentant une inclinaison par rapport à la direction de translation, caractérisé en ce que l'outil en pénétrant dans le sol subit un basculement dans le sens opposé à la direction de translation qui est plus important dans la région de la couche superficielle du sol qu'au tranchant, et que lors de l'enlèvement de l'outil, le sol est davantage déplacé dans le sens opposé à la direction de translation dans la région de la couche superficielle que plus bas.

2. Procédé selon la revendication 1, caractérisé en ce qu'à chaque plongée de l'outil des adjuvants tels que des engrais sont soufflés ou lancés dans la fente de terre créée.

3. Procédé selon la revendication 1, caractérisé en ce que lors de la plongée de l'outil un ameublissement préliminaire est effectué avec la face supérieure du soc et que lors du retrait de l'outil un ameublissement fin est réalisé avec la face inférieure du soc.

4. Dispositif pour la mise en oeuvre du procédé selon les revendications 1 à 3, dans lequel une poutre (1) qui s'étend dans le sens de la marche et sert de support aux outils de labourage (2, 2', 2''), est articulée sur une sellette solidaire d'un véhicule tracteur par l'intermédiaire d'une première articulation (P4) orientée transversalement au sens de la marche et peut être entraînée de façon à pouvoir pivoter autour de la première articulation (P4), dans un plan vertical orienté dans le sens de la marche, au moyen d'un mécanisme d'entraînement à manivelle ou à excentrique (4) monté sur la poutre (1) par l'intermédiaire d'une seconde articulation (P5), caractérisé en ce que la première articulation (P4) est disposée à l'extrémité inférieure d'un levier (3) d'une longueur de levier ($l_5$, $l_5'$) pouvant être présélectionnée et dont l'extrémité supérieure est fixée, par l'intermédiaire d'une troisième articulation (P1...P3) orientée transversalement au sens de la marche, dans une position présélectionnée sur la sellette solidaire du véhicule tracteur; que la distance entre la troisième articulation (P1...P3) et la seconde articulation (P5) est inférieure à la somme de la longueur ($l_5$, $l_5'$) du levier (3) et de la distance ($l_1$) entre la première articulation (P4) et la seconde articulation (P5); que le diamètre du cercle décrit par le mécanisme d'entraînement à manivelle ne coupe pas la ligne de liaison entre la première articulation (P4) et la troisième articulation (P1...P3); et que la longueur du levier (3) est plus grande que le rayon du cercle décrit par le mécanisme d'entraînement à manivelle.

5. Dispositif selon la revendication 4, caractérisé en ce que plusieurs outils de labourage (2, 2', 2'') sont montés sur la poutre (1) en avant et/ou en arrière du mécanisme d'entraînement à manivelle ou à excentrique (4).

6. Dispositif selon l'une des revendications 4 et 5, caractérisé en ce que le mécanisme d'entraînement (4) est réalisé de manière hydrostatique ou par l'intermédiaire d'un arbre de prise de force (23) du véhicule tracteur.

7. Dispositif selon l'une des revendications 4 à 6, caractérisé en ce que plusieurs poutres (1) munies d'outils (2, 2', 2'') sont fixées de manière répartie sur la largeur de la marche sur un cadre (16) qui peut être monté sur le véhicule tracteur.

8. Dispositif selon l'une des revendications 4 à 7, caractérisé en ce que le cadre (16) comporte des faces latérales (18) fixées sur une plaque frontale (17) et montées sur une traverse (19) qui maintient le mécanisme d'entraînement (4) et la poutre (1), et que sur la traverse (19) sont disposées des faces (20) supplémentaires sur lesquelles la poutre (1) est articulée par l'intermédiaire d'attaches (3).

9. Dispositif selon la revendication 8, caractérisé en ce que les faces (20) présentent, à distance horizontale et verticale de la traverse (19), différents alésages (21) pour la fixation de l'attache (3).

10. Dispositif selon l'une des revendications 8 et 9, caractérisé en ce que la position de fixation de l'attache (3) sur les faces (20) peut être réglée en continu.

11. Dispositif selon l'une des revendications 4 à 10, caractérisé en ce que les faces (18) entre la plaque frontale (17) et la traverse (19) font ressort transversalement au sens de la marche et qu'elles sont stables dans le sens vertical.

12. Dispositif selon l'une des revendications 4 à 11, caractérisé en ce que la poutre (1) présente sensiblement au milieu un palier (9) pour le méchanisme d'entraînement (4) sur lequel sont disposées de part et d'autre des faces (10, 11) qui sont munies d'une figure d'alésages (12, 12') pour le montage des outils (2, 2', 2'').

13. Dispositif selon l'une des revendications 4 à 12, caractérisé en ce qu'un outil de labourage (2'') avec un longeron (5) et un court soc (6) est monté sur le mécanisme d'entraînement (4).

14. Dispositif selon l'une des revendications 4 à 13, caractérisé en ce que les faces (20) sont fixées sur la traverse (19) de façon à présenter un décalage d'environ 180° par rapport au sens de la marche (a).

15. Dispositif selon l'une des revendications 4 à 14, caractérisé en ce que l'outil de labourage (2, 2', 2'') est suspendu de manière oscillante sur la poutre (1) pour assurer un blocage transversal.

16. Dispositif selon l'une des revendications 4 à 15, caractérisé en ce que les attaches (3) sur les faces supplémentaires (20) du cadre (16) sont soutenues de manière élastique sur un élément à ressort (25).

17. Dispositif selon l'une des revendications 4 à 16, caractérisé en ce que l'outil (2) est fixé unilatéralement sur la poutre (1) et qu'il prend appui en un second point sur un élément à ressort (26).

18. Dispositif selon l'une des revendications 4 à 17, caractérisé en ce qu'un outil élastique (27) est fixé sur la poutre (1).

19. Dispositif selon l'une des revendications 4 à 18, caractérisé en ce que sur le cadre (16) est prévu un dispositif (28) pour amener des adjuvants tels que des engrais.

20. Dispositif selon la revendication 19, caractérisé en ce que le dispositif (28) comprend un tuyau d'amenée (30) monté sur un dispositif de dosage (29).

21. Dispositif selon l'une des revendications 19 et 20, caractérisé en ce que le dispositif de dosage (29) est conformé en alimenteur à roue cellulaire, et qu'au dispositif de dosage (29) est raccordée une arrivée d'air (33) reliée à une soufflante (34).

22. Dispositif selon l'une des revendications 19 à 21, caractérisé en ce qu'au-dessus du dispositif de dosage (29) est installé un réservoir (31) équipé d'un agitateur (32).

23. Dispositif selon l'une des revendications 19 à 22, caractérisé en ce qu'une coulisse de dosage (37) est disposée au fond du réservoir (31), en amont du dispositif de dosage (29).

24. Dispositif selon l'une des revendications 19 à 23, caractérisé en ce qu'au fond du réservoir est disposé un alimenteur à roue cellulaire (58) entraîné en fonction de la vitesse de marche, et qu'une chicane (60) réglable en continu est prévue au-dessous de l'alimenteur (58).

25. Dispositif selon la revendication 24, caractérisé en ce que l'alimenteur à roue cellulaire (58) est en prise avec une roue cellulaire supplémentaire (59).

26. Dispositif selon l'une des revendications 19 à 25, caractérisé en ce que dans le réservoir (57) est prévu un dispositif à secousses (62) à base de ressorts à lames, muni de pointes vibrantes latérales (63), qui est entraîné par les palettes de l'alimenteur à roue cellulaire (58).

27. Dispositif selon l'une des revendications 19 à 26, caractérisé en ce qu'au fond du réservoir (65) est prévue une bande transporteuse (64) entraînée en fonction de la vitesse de marche.

28. Dispositif selon l'une des revendications 4 à 27, caractérisé en ce que le cadre (16) avec la poutre (1) et le dispositif de dosage (29), est monté sur un véhicule suiveur (38).

29. Dispositif selon l'une des revendications 4 à 28, caractérisé en ce que l'outil (2) est conformé en croissant, que lors de la plongée, il existe un angle de dépouille sur le tranchant (7), et qu'il se produit un déplacement simultané du sol dans le sens opposé à la marche, en particulier dans la région superficielle.

30. Dispositif selon l'une des revendications 4 à 29, caractérisé en ce que l'outil (2) présente un soc court (6) avec des tranchants (7) inférieur et supérieur, qui est fixé sur un longeron (5).

31. Dispositif selon l'une des revendications 4 à 30, caractérisé en ce que la poutre (1) porte, en aval de l'outil d'ameublissement (2), une bêche (40).

32. Dispositif selon l'une des revendications 4 à 31, caractérisé en ce que l'outil d'ameublissement (43) est muni dans la partie supérieure d'un soc latéral supplémentaire (44).

33. Dispositif selon l'une des revendications 4 à 32, caractérisé en ce que l'outil d'ameublissement (2) est replié latéralement et qu'en aval dudit outil (2) sont prévus des outils supplémentaires (53) montés sur des ressorts (54).

34. Dispositif selon l'une des revendications 4 à 33, caractérisé en ce qu'une dent sous-soleuse (45) est prévue comme outil d'ameublissement.

35. Dispositif selon la revendication 34, caractérisé en ce que plusieurs dents (48, 49) sont montées sur la poutre (1).

36. Dispositif selon l'une des revendications 4 à 35, caractérisé en ce que dans la zone de défoncement de la poutre (1) sont prévus deux socs (50) décalés l'un par rapport à l'autre.

37. Dispositif selon l'une des revendications 4 à 36, caractérisé en ce que la poutre (1) porte des socs en coeur (6'', 51) pour le travail du sol en profondeur et en surface.

38. Dispositif selon l'une des revendications 4 à 37, caractérisé en ce que la poutre (1) est montée sur un système de leviers en parallélogramme (fig. 29, 30).

**Claims**

1. Process for loosening soil in the lower and upper layers of the soil with the use of digging tools by means of which the soil is broken up, where the cutting edge of the cutting tool is guided with an elliptical movement and this movement is superimposed on the straight line movement in the direction of travel and in that the major axis of the ellipse is directed from the surface of the ground down into the soil and is inclined at an angle to the direction of travel, characterized in that when the digging tool penetrates the soil, it undergoes a stronger tilting opposite to the direction of travel than on the share and in that, when the digging tool is lifted up, the soil in the upper layers is more strongly compacted against the direction of travel.

2. The process according to Claim 1, characterised in that, for each insertion of the tool into the soil, an additive such as a fertiliser is blown into, or thrown into, the resulting gap in the soil.

3. The process according to Claim 1, characterised in that, when the digging tool is inserted, there is a preliminary loosening by means of the upper side of the share and, when the tool is lifted out of the soil, there is a finer loosening of the soil.

4. Equipment for carrying out the process according to Claims 1 to 3, a rocker beam (1) which extends in the direction of travel and serves as the carrier for the tools (2, 2', 2'') is articulated with a framework which is firmly attached to the tractor, by way of a first joint ($P_4$) transverse to the direction of travel, and it is capable of being rocked up and down around this first joint ($P_4$) in a vertical plane which extends in the direction of travel by means of a crankshaft or eccentric drive (4) which engages with the beam (1) characterised in that the first joint ($P_4$) is located at the lower end of a linkage lever (3) with pre-selectable length ($l_5$, $l_5'$), the upper end of said lever being connected by way of a third joint ($P_1...P_3$) transverse to the direction of travel of the framework, which is rigidly mounted on the tractor, in a pre-selectable position, and where the distance of the third joint ($P_1...P_3$) away from the second joint ($P_5$) is less than the sum of the lengths of the lever ($l_5$, $l_5'$) and of the distance ($l_1$) of the first joint ($P_4$) away from the second joint ($P_5$), and where the diameter of the circle which is described by the crankshaft drive does not intersect the connecting line between the first joint ($P_4$) and the third joint ($P_1...P_3$) and the length of the lever (3) is greater than the radius of the circle described by the crankshaft drive.

5. The equipment according to Claim 4, characterised in that several tools (2, 2', 2'') can be located on the beam (1) either in front of, or behind, the crankshaft or eccentric-drive mechanism (4).

6. The equipment according to Claims 4 and 5, characterised in that the drive mechanism (4) can be actuated by hydrostatic means or by a power-take-off shaft (23).

7. The equipment according to any one of Claims 4 to 6, characterised in that several beams (1) with tools (2, 2', 2'') are arranged side by side over the width of the travel track and they are mounted on a framework (16) which can be coupled to the traction vehicle.

8. The equipment according to any one of Claims 4 to 7, characterised in that the framework (16) has side checks (18) fastened to a front plate (17) which are mounted on a cross-bearer (19) which carries the drive mechanism (4) and the beams (1) and the cross-bearer (19) is furnished with additional side checks (20) from which the beams (1) are suspended by articulation with fishplates (3).

9. The equipment according to Claim 8, characterised in that various holes are drilled in the checks (20) at a distance away from, and at the same height as, the cross-bearer (19) for the attachment of fish-plates (3).

10. The equipment according to Claims 8 and 9, characterised in that the position of attachment of the fish-plates (3) on the checks (20) is infinitely adjustable.

11. The equipment according to any one of Claims 4 to 10, characterised in that the checks (18) between the front plate (17) and the cross-bearer (19) have spring-like flexibility transversely to the direction of travel, but they are solidly constructed in the vertical direction.

12. The equipment according to any one of Claims 4 to 11, characterised in that the beam (1) has an approximately central bearing (9) for the drive mechanism (4), with cheeks (10, 11) arranged on both sides that are provided with a pattern of drilled holes (12, 12') for appropriate attachment of the tools (2, 2', 2'').

13. The equipment according to any one of Claims 4 to 12, characterised in that a digging tool (2'') with a spar (5) and short share (6) is mounted after the drive mechanism (4).

14. The equipment according to any one of Claims 4 to 13, characterised in that the side cheeks (20) which have been rotated through approximately 180° to point in the direction of travel are attached to the cross-bearer (19).

15. The equipment according to any one of Claims 4 to 14, characterised in that the digging tool (2, 2', 2'') is suspended in a pendulum fashion in the beam (1) to give transverse security.

16. The equipment according to any one of Claims 4 to 15, characterised in that the fish-plates (3) are supported on the additional cheek plates (20) of the framework (16) with a degree of springiness on a spring member (25).

17. The equipment according to any one of Claims 4 to 16, characterised in that the tool (2) is fastened to one end of the beam (1) and attached at a second point to a spring member (26).

18. The equipment according to any one of Claims 4 to 17, caracterised in that the springloaded tool (27) is attached to the beam (1).

19. The equipment according to any one of Claims 4 to 18, characterised in that a device (28) for the supply of additives, such as fertiliser, is provided on the framework (16).

20. The equipment according to Claim 19, characterised in that the device (28) has a distributor tube (30) attached to the additive-metering equipment (29).

21. The equipment according to Claims 19 and 20, characterised in that the metering equipment (29) is configured as a cell-wheel sluice and an air-supply pipeline (33) coupled to a blower fan (34) is connected to the metering equipment (29).

22. The equipment according to any one of Claims 19 to 21, characterised in that a container (31) with a stirrer mechanism (32) is provided above the metering equipment (29).

23. The equipment according to any one of Claims 19 to 22, characterised in that the container (31) is provided with a metering slide valve (37) in its base above the metering equipment (29).

24. The equipment according to any one of Claims 19 to 23, characterised in that a cell-wheel sluice (58) driven in dependence on the speed of travel of the traction vehicle is located in the bottom of the container and below the sluice (58) there is an infinitely adjustable baffle plate (60) provided.

25. The equipment according to Claim 24, characterised in that there is a second cell-wheel (59) in engagement with the sluice wheel (58).

26. The equipment according to any one of Claims 19 to 25, characterised in that there is a vibratory device (62), based upon the leaf-spring principle which has lateral vibratory prongs (63) and which is driven by the web-plates of the cell-wheel sluice (58), inside the container (57).

27. The equipment according to any one of Claims 19 to 26, characterised in that a driven conveyor belt (64) is provided at the bottom of the container (65), the rate of travel of which is dependent upon the speed of the traction vehicle.

28. The equipment according to any one of Claims 4 to 27, characterised in that the framework (16) with the beam (1) and the metering equipment (29) are located on a trailer (38).

29. The equipment according to any one of Claims 4 to 28, characterised in that the tool has a sickle configuration and, during insertion, a clearance angle is present at the cutting edge (7) and there is a simultaneous displacement of the soil, especially in the topsoil region in the direction opposite to the direction of travel of the tractor.

30. The equipment according to any one of Claims 4 to 29, characterised in that the tool (2) is provided with a short share (6), having upper and lower cutting edges (7), which is attached to a spar (5).

31. The equipment according to any one of Claims 4 to 30, characterised in that a spade-like digging tool (40) is located on the beam (1) after the loosening tool (2).

32. The equipment according to any one of Claims 4 to 31, characterised in that an additional side share (44) is provided in the upper region of the loosening tool (43).

33. The equipment according to any one of Claims 4 to 32, characterised in that the loosening tool (2) is bent back at an angle on both sides and auxiliary tools (53) with spring attachments (54) are located after said loosening tool (2).

34. The equipment according to any one of Claims 4 to 33, characterised in that the loosening tool is provided in the form of a depth-prong or time (45).

35. The equipment according to Claim 34, characterised in that several prongs (48, 49) are attached to the beam (1).

36. The equipment according to any one of Claims 4 to 35, characterised in that two staggered shares (50) are provided in the breaking-up region of the beam (1).

37. The equipment according to any one of Claims 4 to 36, characterised in that goose-foot shares (6'', 51) are provided on the beam (1) for cultivation of both subsoil and topsoil.

38. The equipment according to any one of Claims 4 to 37, characterised in that the beam (1) is arranged on a parallelogram lever system (Fig. 29 and Fig. 30).

Fig.1

Fig.2

Fig. 3

Fig.4

Fig.5

Fig.6

Fig. 7

Fig.8

7

Fig. 9

EP 0 289 517 B1

Fig. 10

Fig. 11

EP 0 289 517 B1

Fig. 12

Fig. 13

Fig. 14

Fig. 15

34  33  33  32  31  29  30  23

Fig. 16

Fig. 17

Fig. 18   Fig. 19   Fig. 20

57
58
59
61
60

63
62
57
58
61
60

65
64   66

EP 0 289 517 B1

Fig. 21

Fig. 22

EP 0 289 517 B1

Fig. 23

EP 0 289 517 B1

Fig. 24

Fig. 25

Fig. 26

47

1

10

11

48

49

EP 0 289 517 B1

Fig. 27

1

10

11

50

50

50

EP 0 289 517 B1

Fig. 28

EP 0 289 517 B1

# Fig. 29

# Fig. 30